# EUROPÄISCHE PATENTSCHRIFT

(11) **EP 3 683 097 B1**
(45) Veröffentlichungstag und Bekanntmachung des Hinweises auf die Patenterteilung: **25.08.2021**
(21) Anmeldenummer: 19178619.3
(22) Anmeldetag: 06.06.2019
(51) Int. Cl.: B60R 11/02

(54) **VORRICHTUNG UND VERFAHREN ZUM EINSTELLEN EINER DISPLAYANORDNUNG FÜR EIN FAHRZEUGDACH UND FAHRZEUGDACH FÜR EIN KRAFTFAHRZEUG**
DEVICE AND METHOD FOR ADJUSTING A DISPLAY ASSEMBLY FOR A VEHICLE ROOF AND CORRESPONDING ROOF
DISPOSITIF ET PROCÉDÉ DE RÉGLAGE D'UN DISPOSITIF D'AFFICHAGE POUR UN TOIT DE VÉHICULE ET TOIT ASSOCIÉ

(30) Priorität: 21.01.2019 DE 102019101397
(43) Veröffentlichungstag der Anmeldung: 22.07.2020
(73) Patentinhaber: Webasto SE, 82131 Stockdorf (DE)
(72) Erfinder: Haberl, Franz, 82131 Stockdorf (DE)
(74) Vertreter: Epping - Hermann - Fischer

(56) Entgegenhaltungen:
- DE-A1-102015 120 809
- JP-A- H11 342 798
- JP-A- 2004 149 057
- JP-A- 2004 182 049
- JP-A- 2007 314 057
- JP-A- 2009 166 582
- JP-A- 2015 134 573
- JP-A- 2017 114 287
- US-A1- 2011 133 028

## Beschreibung

Die Erfindung betrifft eine Vorrichtung und ein Verfahren zum Einstellen einer Displayanordnung für ein Fahrzeugdach. Die Erfindung betrifft weiter ein Fahrzeugdach für ein Kraftfahrzeug mit einer solchen Vorrichtung.

Einige Kraftfahrzeuge weisen eine Displayanordnung auf, die auf Wunsch ein Unterhaltungsprogramm bereitstellen kann und zu einem erhöhten Komfort des Kraftfahrzeugs beiträgt. Gegebenenfalls ist eine solche Displayanordnung mit einem Kinematikkonzept versehen, welches bei Bedarf ein Ein- und Ausklappen der Displayanordnung ermöglicht. Zum Beispiel offenbart die Druckschrift JP 2007 314057 A1 eine Vorrichtung zum Ausrichten eines Displays, welche ein Durchführen von Öffnungs- und Schließvorgängen des Displays ermöglicht. Die Vorrichtung weist dabei eine Drehwelle und einen Verbindungsarm auf, die eine dreieckige Verbindung mit einem sich in horizontaler Richtung bewegenden Drehpunkt ausbilden. Somit ist eine Hebelmechanik realisiert, die ein Auf- und Einschwenken und ein Einstellen eines Ausrichtungswinkels des Displays ermöglicht.

Dabei ist es eine Herausforderung eine platzsparende und kostengünstige Anordnung einer solchen Unterhaltungselektronik zu ermöglichen.

Der Erfindung liegt die Aufgabe zugrunde, eine Vorrichtung und ein Verfahren zum Einstellen einer Displayanordnung für ein Fahrzeugdach zu schaffen, die jeweils ein zuverlässiges und sicheres Ausbilden einer gewünschten Einstellung der Displayanordnung ermöglichen und zudem zu einem kostengünstigen und komfortablen Kraftfahrzeug beitragen können.

Die Aufgabe wird durch die Merkmale der unabhängigen Patentansprüche gelöst. Vorteilhafte Ausgestaltungen sind in den Unteransprüchen angegeben.

Eine erfindungsgemäße Vorrichtung zum Einstellen einer Displayanordnung für ein Fahrzeugdach umfasst eine erste Hebelmechanik und eine zweite Hebelmechanik, die mit der Displayanordnung koppelbar sind, wobei die erste Hebelmechanik zum Auf- und Einschwenken und Verfahren der Displayanordnung und die zweite Hebelmechanik zum Einstellen eines vorgegebenen Ausrichtungswinkels der Displayanordnung ausgebildet sind. Die erste Hebelmechanik weist ein erstes Antriebskabel, einen ersten Führungsgleiter und eine Displayhebelanordnung auf, die mittels einer ersten Antriebseinheit elektrisch verfahrbar sind. Dabei können der erste Führungsgleiter und die Displayhebelanordnung direkt bzw. unmittelbar oder indirekt bzw. mittelbar mittels des ersten Antriebskabels angetrieben werden. Die zweite Hebelmechanik weist ein zweites Antriebskabel und einen zweiten Führungsgleiter auf, die mittels einer zweiten Antriebseinheit elektrisch verfahrbar sind. Dabei kann der zweite Führungsgleiter direkt bzw. unmittelbar oder indirekt bzw. mittelbar mittels des zweiten Antriebskabels angetrieben werden. Der erste und der zweite Führungsgleiter sind hinsichtlich eines gemeinsamen Bezugspunkts zumindest abschnittsweise mit unterschiedlichen Bewegungsgeschwindigkeiten verfahrbar, sodass unabhängig von einer Position der Displayanordnung, die mittels der ersten Hebelmechanik eingestellt ist, ein Abstand zwischen dem ersten und dem zweiten Führungsgleiter und dadurch ein Ausrichtungswinkel der Displayanordnung mittels der zweiten Hebelmechanik vorgegeben einstellbar sind.

Mittels der beschriebenen Vorrichtung ist ein komfortables und zuverlässiges Einstellen einer gewünschten Position und Ausrichtung einer Displayanordnung möglich, welche zudem kostengünstig realisierbar und platzsparend in den Aufbau eines Fahrzeugdachs für ein Kraftfahrzeug integrierbar ist.

Die Vorrichtung realisiert eine elektrisch betätigbare Mechanik zum Schwenken und Verfahren einer Displayanordnung, welche ein bequemes Absenken, Ausrichten und Einstellen eines Displays in einem Fahrzeuginnenraum ermöglicht. Mittels der ersten Hebelmechanik und einer mit dieser koppelbaren ersten Antriebseinheit kann die Displayanordnung kontrolliert und zuverlässig ein- und ausgeschwenkt und verfahren werden, um eine gewünschte Schwenk- oder Hub-Position der Displayanordnung auszubilden. Mittels der zweiten Hebelmechanik und einer mit dieser koppelbaren zweiten Antriebseinheit kann unabhängig von der Schwenk- oder Hub-Position der Displayanordnung, die mittels der ersten Hebelmechanik eingestellt wurde, eine Winkelausrichtung verändert und im Sinne einer Feineinstellung manipuliert oder nachjustiert werden.

Die beschriebene Vorrichtung mit der ersten und zweiten Hebelmechanik kann insbesondere kostengünstig und platzsparend realisiert werden, sodass ein Bauraumbedarf in einem Fahrzeuginnenraum gering gehalten werden kann. Die Vorrichtung kann insbesondere in einem Fahrzeugdach integriert sein oder an einem solchen angeordnet sein und dennoch eine komfortable Kopfbewegungsfreiheit in dem Fahrzeuginnenraum ermöglichen. Auf diese Weise kann zu einer hochwertigen Unterhaltungsmöglichkeit in einem Kraftfahrzeug beigetragen werden.

Gemäß einer Weiterbildung weist die zweite Hebelmechanik ferner einen Kopplungshebel auf, der den ersten und zweiten Führungsgleiter miteinander koppelt.

Gemäß einer Weiterbildung der Vorrichtung weist die zweite Hebelmechanik eine zweite Hebelanordnung auf, die mit dem zweiten Antriebskabel und mittels des Kopplungshebels mit dem zweiten Führungsgleiter gekoppelt ist und die dazu eingerichtet ist, einen horizontalen Versatz in einer horizontalen Ebene, die senkrecht zu einer Haupterstreckungsebene der ausgeklappten Displayanordnung ist, in eine Änderung des Abstandes zwischen den Führungsgleitern zu überführen.

Gemäß einer bevorzugten Weiterbildung der Vorrichtung weist die zweite Hebelanordnung einen ersten und einen zweiten Schwenkhebel und einen Führungshebel mit jeweiligen Kulissen auf, die mit dem zweiten Antriebskabel und mit dem Kopplungshebel gekoppelt sind und die mittels der durch die jeweiligen Kulissen vorgegebenen Führung dazu ausgebildet sind, einen vorgegebenen Abstand zwischen den Führungsgleitern einzustellen. Die Schwenkhebel der zweiten Hebelanordnung können auch als Verstellgleiter bezeichnet werden, die angetrieben von einer zweiten Antriebseinheit eine in der Führungsschiene gleitende Bewegung zum Verstellen der Displayanordnung ausführen. Der Führungshebel der zweiten Hebelanordnung kann auch als Führungselement bezeichnet werden, das bei Betätigung im Zusammenwirken mit dem Kopplungshebel und dem ersten Führungsgleiter eine führende Bewegung zum Ausrichten der Displayanordnung ausführt.

Mittels solcher Weiterbildungen kann auf einfache und kostengünstige Weise eine lineare Bewegung des zweiten Antriebskabels und des damit gekoppelten Führungsgleiters entlang der Längsachse in eine Winkelbewegung der Displayanordnung umgewandelt werden, welche einen vorgebbaren Einstellungsbereich eines Ausrichtungswinkels ermöglicht. Der horizontale Versatz und die damit ermöglichte Einstellung des Ausrichtungswinkels geben einen möglichen Winkelbereich vor und tragen zu einem besonders platzsparenden und flachen Aufbau der Vorrichtung bei. Vorzugsweise wird mittels der Vorrichtung ein horizontaler Versatz bereitgestellt, welcher eine Winkelverstellung des Ausrichtungswinkels der vertikal ausgeklappten Displayanordnung von bis zu 15° ermöglicht. Darüber hinaus sind auch andere Winkelbereiche möglich.

Im Rahmen dieser Beschreibung bezeichnen Begriffe, wie "oben", "unten", "vorne", "hinten", "links", "rechts" sowie "vertikal" und "horizontal", Richtungsangaben oder Ausrichtungen, welche sich auf einen betriebsgemäßen Einsatz in einem betriebsbereiten Kraftfahrzeug beziehen. Die beschriebene Displayanordnung, welche mittels der beschriebenen Vorrichtung bei Bedarf einfach und komfortabel abgesenkt und ausgerichtet werden kann, ist insbesondere für Fahrzeuginsassen auf der hinteren Sitzbank vorgesehen. Eine horizontale Bewegungskomponente bezieht sich somit auf eine Ebene, die im Wesentlichen parallel zu dem Fahrzeugdach ist. Eine vertikale Ausrichtung erfolgt somit in einer Ebene, die im Wesentlichen senkrecht zu der horizontalen Ebene oder dem Fahrzeugdach ist.

In einem eingeklappten Zustand befindet sich die Displayanordnung beziehungsweise das Display hinsichtlich seiner Haupterstreckungsebene vorzugsweise parallel zu dem Fahrzeugdach, sodass ein Ausklappen oder Aufschwenken in Richtung des Fahrzeuginnenraums erfolgt, indem die Displayanordnung mittels der ersten Hebelmechanik um eine oder mehrere Schwenkachsen umgeklappt wird und in einem ausgeklappten Zustand beispielsweise vertikal in den Fahrzeuginnenraum ausgerichtet ist. Mittels der zweiten Hebelmechanik kann nun eine zuverlässige und komfortable Feineinstellung der Winkelausrichtung der Displayanordnung erfolgen, indem mittels Antreiben des zweiten Antriebskabels ein Abstand zwischen den Führungsgleitern gezielt verändert wird, welche das kontrollierte Ausbilden einer gewünschten Neigung der vertikal ausgerichteten Displayanordnung bewirkt. Auf diese Weise ist ein gewünschter Ausrichtungswinkel des Displays einstellbar und es kann zu einem besonders angenehmen und komfortablen Unterhaltungsprogramm beigetragen werden.

Gemäß einer weiteren bevorzugten Weiterbildung der Vorrichtung weist der erste Schwenkhebel und der Führungshebel in den zugehörigen Kulissen einen jeweils länglichen Kulissenabschnitt auf, der relativ zu der Längsachse schräg verläuft und eine vorgegebene Länge besitzt und in einer horizontalen Ebene einen vorgegebenen Winkel zu der Längsachse einschließt.

Gemäß einer weiteren Weiterbildung der Vorrichtung sind die vorgegebene Länge und der vorgegebene Winkel der länglichen Kulissenabschnitte relativ zu der Längsachse in Abhängigkeit von einer Einstellgeschwindigkeit zum Einstellen eines vorgegebenen Ausrichtungswinkels der Displayanordnung ausgebildet. Die Länge und die geneigte Ausrichtung der länglichen Kulissenabschnitte bestimmen im Zusammenwirken mit der zweiten Antriebseinheit die Einstellgeschwindigkeit und den möglichen einstellbaren Winkelbereich für den Ausrichtungswinkel der Displayanordnung. Auf diese Weise kann eine Möglichkeit zur zügigen Ausrichtung oder zur langsamen, sanften Ausrichtung der Displayanordnung eingerichtet werden.

Gemäß einer weiteren bevorzugten Weiterbildung der Vorrichtung ist das erste Antriebskabel mit dem zweiten Führungsgleiter gekoppelt, sodass der erste Führungsgleiter mittels des zweiten Führungsgleiters antreibbar ist. Auf diese Weise kann der zweite Führungsgleiter mittels der ersten Antriebseinheit direkt aktiv und der erste Führungsgleiter indirekt passiv angetrieben werden. Der zweite Führungsgleiter koppelt zum Beispiel an einer vorgegebenen Position relativ zu der führenden Führungsschiene mit dem ersten Führungsgleiter und treibt diesen entlang der Führungsschiene vor sich her. Dabei können die Führungsgleiter direkt miteinander koppeln und sich kontaktieren und einen Abstand von etwa Null zueinander aufweisen, oder mit einem vorgegebenen Gleiterabstand größer Null miteinander gekoppelt werden. Ein Einstellen des Ausrichtungswinkels durch Verändern des Abstands zwischen den Führungsgleitern erfolgt dann mittels der zweiten Antriebseinheit.

Alternativ kann die erste Antriebseinheit aber auch mit dem ersten oder zweiten Führungsgleiter und die zweite Antriebseinheit mit dem jeweils anderen der beiden Führungsgleiter gekoppelt sein, um ein Ausklappen der Displayanordnung und Einstellen des Ausrichtungswinkels durch Abstandsveränderung zwischen den Führungsgleitern zu ermöglichen.

Gemäß einer weiteren bevorzugten Weiterbildung umfasst die Vorrichtung die erste und die zweite Antriebseinheit von denen eine oder beide einen Elektromotor aufweisen, der zum Auf- und Einschwenken und zum Verfahren der Displayanordnung und/oder der zum Einstellen eines Abstands zwischen den Führungsgleitern und zum Einstellen eines Ausrichtungswinkels der Displayanordnung mit dem jeweiligen Antriebskabel gekoppelt ist.

Die erste und/oder die zweite Antriebseinheit sind so ausgebildet, dass der erste und der zweite Führungsgleiter hinsichtlich eines gemeinsamen Bezugspunkts, zum Beispiel relativ zu einer Führungsschiene, mit der die Führungsgleiter gekoppelt werden, zumindest abschnittsweise mit unterschiedlichen Bewegungsgeschwindigkeiten verfahrbar sind. Die unterschiedlichen Geschwindigkeiten des ersten und des zweiten Führungsgleiters können insbesondere mittels einer elektronischen Drehzahlregelung der ersten und/oder der zweiten Antriebseinheit eingestellt werden. Somit kann ein besonders übersichtlicher und platzsparender Aufbau der Vorrichtung realisiert werden. Die Führungsgleiter sind jeweils mit der Displayanordnung gekoppelt und ermöglichen aufgrund unterschiedlicher Antriebsgeschwindigkeiten ein Aufklappen und Verschwenken der Displayanordnung.

Mittels der Vorrichtung ist eine Mechanik mit elektrisch verstellbarer Displayausrichtung ausbildbar, die im Vergleich zu konventionellen Konzepten, die zum Beispiel ein Verschwenken eines Displays mit einem auf der Rückseite des Displays angebrachten Verstellmotors ermöglichen, einige Vorteile bietet. Insbesondere ein Platzbedarf in einer vertikalen Richtung kann gering gehalten werden, sodass eine Parkposition der Displayanordnung nicht so nahe an den Kopfkreisen von Fahrzeuginsassen liegt und eine Sicht nach vorne nicht oder weniger eingeschränkt wird. Die erste und die zweite Hebelmechanik können insbesondere mittels einfacher im Fahrzeugdach fest verbauter Elektroantriebe betätigt werden, sodass zum Beispiel zum Einstellen und Ausrichten der Displayanordnung keine Linearantriebe erforderlich sind und ein besonders platzsparender Aufbau realisiert werden kann.

Das Abklappen oder Ausklappen der Displayanordnung erfolgt durch eine Verschiebung eines der beiden Führungsgleiter relativ zu dem anderen. Eine Verstellung des Verschwenkwinkels bzw. des Ausrichtungswinkels erfolgt durch eine Änderung des Abstands der beiden Führungsgleiter zueinander und kann über den gesamten Verfahrbereich der Displayanordnung durchgeführt werden.

Ein erfindungsgemäßes Fahrzeugdach umfasst zwei Führungsschienen, die in Bezug auf eine Längsachse des Fahrzeugdachs auf gegenüberliegenden Seiten des Fahrzeugdachs angeordnet sind, und eine Ausgestaltung der zuvor beschriebenen Vorrichtung zum Einstellen einer Displayanordnung, die mittels der Führungsschienen mit dem Fahrzeugdach gekoppelt ist. Die Vorrichtung kann insbesondere bestehende Räume innerhalb einer jeweiligen Führungsschiene nutzen, die zum Beispiel auch zum Betreiben einer Verdunkelungsvorrichtung ausgebildet sind. Insbesondere können die erste und zweite Hebelmechanik innerhalb einer gemeinsamen Führungsschiene angeordnet sein, sodass sich die Hebelmechaniken eine gemeinsame Führungsschiene teilen.

In Bezug auf ein Fahrzeugdach kann die Vorrichtung insbesondere eine doppelte Anzahl der beschriebenen Komponenten umfassen, die hinsichtlich einer zentralen oder mittigen Längsachse des Fahrzeugdachs im Wesentlichen spiegelsymmetrisch ausgebildet und angeordnet sind. Das Fahrzeugdach mit der beschriebenen Vorrichtung trägt somit zu einem erhöhten Komfort eines Kraftfahrzeugs bei und ist im Vergleich zu konventionellen Kippeinrichtungen für ein Display kostengünstiger herstellbar. Dadurch, dass das Fahrzeugdach eine Ausgestaltung der zuvor beschriebenen Vorrichtung umfasst, sind, sofern zutreffend, sämtliche zuvor beschriebenen Merkmale und Eigenschaften der Vorrichtung auch für das Fahrzeugdach offenbart und umgekehrt.

Ein erfindungsgemäßes Verfahren zum Einstellen einer Displayanordnung für ein Fahrzeugdach umfasst ein Betätigen einer ersten Hebelmechanik mittels Verfahren eines ersten Antriebskabels und eines an dem ersten Antriebskabel gekoppelten Führungsgleiters, der mittels einer schwenkbaren Displayhebelanordnung mit der Displayanordnung gekoppelt ist, und dadurch Schwenken der Displayanordnung und Ausbilden eines ausgeklappten Zustands der Displayanordnung. Das Verfahren umfasst weiter ein Betätigen einer zweiten Hebelmechanik mittels Verfahren eines zweiten Antriebskabels und Bewegen eines an dem zweiten Antriebskabel gekoppelten zweiten Führungsgleiters, der mittels eines Kopplungshebels mit einem ersten Führungsgleiter gekoppelt ist, und dadurch Einstellen eines vorgegebenen Abstands zwischen dem ersten und dem zweiten Führungsgleiter bezogen auf eine Längsachse des Fahrzeugdachs und dadurch Einstellen eines vorgegebenen Ausrichtungswinkels der Displayanordnung unabhängig von dem ausgebildeten ausgeklappten Zustand der Displayanordnung.

Mittels des beschriebenen Verfahrens ist ein zuverlässiges und sicheres Ausbilden einer gewünschten Einstellung der Displayanordnung möglich und es kann zudem zu einem kostengünstigen und komfortablen Kraftfahrzeug beigetragen werden. Das Verfahren ist insbesondere mittels einer Ausgestaltung der zuvor beschriebenen Vorrichtung durchführbar, sodass, sofern zutreffend, sämtliche beschriebenen Merkmale und Eigenschaften der Vorrichtung auch für das Verfahren offenbart sind und umgekehrt.

Gemäß einer bevorzugten Weiterbildung des Verfahrens umfasst das Betätigen der ersten und der zweiten Hebelmechanik ein Ansteuern einer ersten Antriebseinheit, die mit dem ersten Antriebskabel gekoppelt ist, und dadurch Bewegen eines aus ersten oder zweiten Führungsgleiters, und ein Ansteuern einer zweiten Antriebseinheit, die mit dem zweiten Antriebskabel gekoppelt ist, und dadurch Bewegen des anderen aus ersten oder zweiten Führungsgleiters, sodass zumindest abschnittsweise unterschiedliche Bewegungsgeschwindigkeiten der beiden Führungsgleiter eingestellt sind. Das Einstellen der unterschiedlichen Bewegungsgeschwindigkeiten der beiden Führungsgleiter kann insbesondere ein Steuern einer Drehzahlregelung der ersten und/oder der zweiten Antriebseinheit umfassen.

Gemäß einer bevorzugten Weiterbildung des Verfahrens umfasst das Betätigen der ersten und der zweiten Hebelmechanik ein Verfahren bzw. Bewegen des ersten Antriebskabels, das mit dem zweiten Führungsleiter gekoppelt ist, und dadurch Verkleinern des Abstands zwischen den Führungsgleitern auf einen ersten Abstand und Ausklappen der Displayanordnung mittels der Displayhebelanordnung. Das Verfahren umfasst weiter ein Verfahren bzw. Bewegen des zweiten Antriebskabels, das mittels einer zweiten Hebelanordnung mit dem zweiten Führungsleiter gekoppelt ist, und dadurch Vergrößern des eingestellten ersten Abstands zwischen den Führungsgleitern auf einen zweiten Abstand und Einstellen eines vorgegebenen Ausrichtungswinkels der Displayanordnung.

Gemäß einer weiteren bevorzugten Weiterbildung umfasst das Verfahren zum Einstellen einer Displayanordnung für ein Fahrzeugdach ein Verfahren bzw. Bewegen des ersten Antriebskabels, das mit dem zweiten Führungsleiter gekoppelt ist, und dadurch Verkleinern des Abstands zwischen den Führungsgleitern auf einen ersten Abstand und Ausklappen der Displayanordnung mittels der Displayhebelanordnung. Das Verfahren umfasst weiter ein Koppeln des zweiten Führungsgleiters mit dem ersten Führungsgleiter und Verfahren bzw. Bewegen des ersten Antriebskabels und dadurch vorhertreiben des ersten Führungsgleiters mittels des zweiten Führungsleiters und Verfahren der ausgeklappten Displayanordnung entlang der Längsachse. Ein eingestellter Ausrichtungswinkel der Displayanordnung kann dabei weiter verändert werden oder über den Verfahrweg beibehalten werden.

Ausführungsbeispiele der Erfindung sind im Folgenden anhand der schematischen Zeichnungen näher erläutert. Es zeigen:
- Figur 1: ein Kraftfahrzeug mit einem Fahrzeugdach in einer perspektivischen Ansicht,
- Figuren 2A-2E: ein Ausführungsbeispiel eines Dachsystems für das Fahrzeugdach nach Figur 1 mit einer Vorrichtung zum Einstellen einer Displayanordnung, und
- Figuren 3A-7C: schematische Darstellungen eines Ausführungsbeispiels der Vorrichtung zum Einstellen der Displayanordnung in verschiedenen Ansichten.

Elemente gleicher Konstruktion oder Funktion sind figurenübergreifend mit den gleichen Bezugszeichen gekennzeichnet. Aus Gründen der Übersichtlichkeit sind gegebenenfalls nicht alle dargestellten Elemente in sämtlichen Figuren mit Bezugszeichen gekennzeichnet.

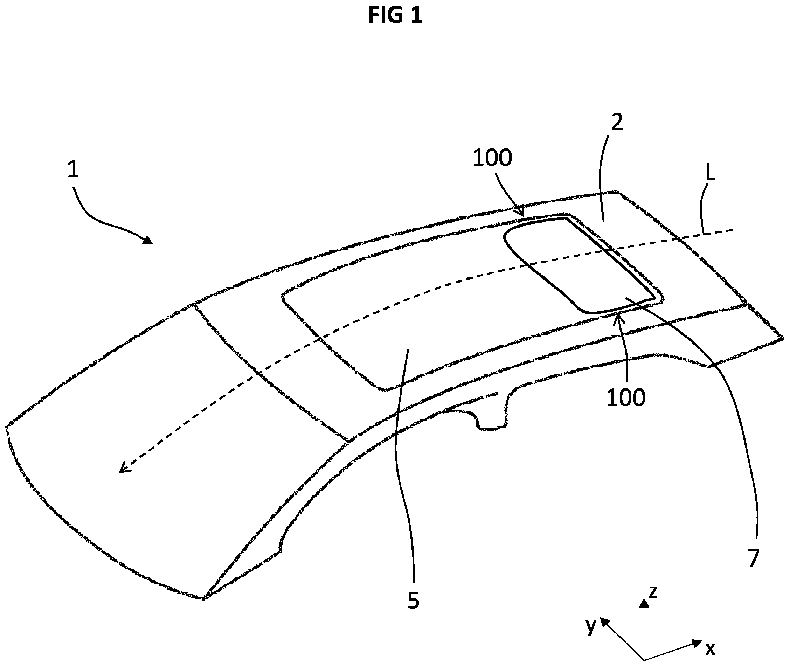

Figur 1 zeigt schematisch in einer perspektivischen Ansicht ein Kraftfahrzeug 1 mit einem Fahrzeugdach 2, das einen Deckel 5 und eine Displayanordnung 7 aufweist. Der Deckel 5 ist zum Beispiel ein zum Fahrzeugdach 2 unbewegliches Festglaselement. Alternativ ist der Deckel 5 relativ zu dem Fahrzeugdach 2 beweglich, um wahlweise eine Öffnung in dem Fahrzeugdach 2 freizugeben und zu verschließen. Das Fahrzeugdach 2 kann auch keinen Deckel 5 aufweisen und eine ausnehmungsfreie Dachhaut eines falt- oder zusammenklappbaren Cabriodachs sein, welches in einem Heckbereich des Kraftfahrzeugs 1 verstaut werden kann. Darüber hinaus kann das Fahrzeugdach 2 auch mit Deckel 5 ein Cabriodach ausbilden, bei dem der Deckel 5 so ausgestaltet ist, dass ein Zusammenfalten oder Zusammenklappen ermöglicht ist.

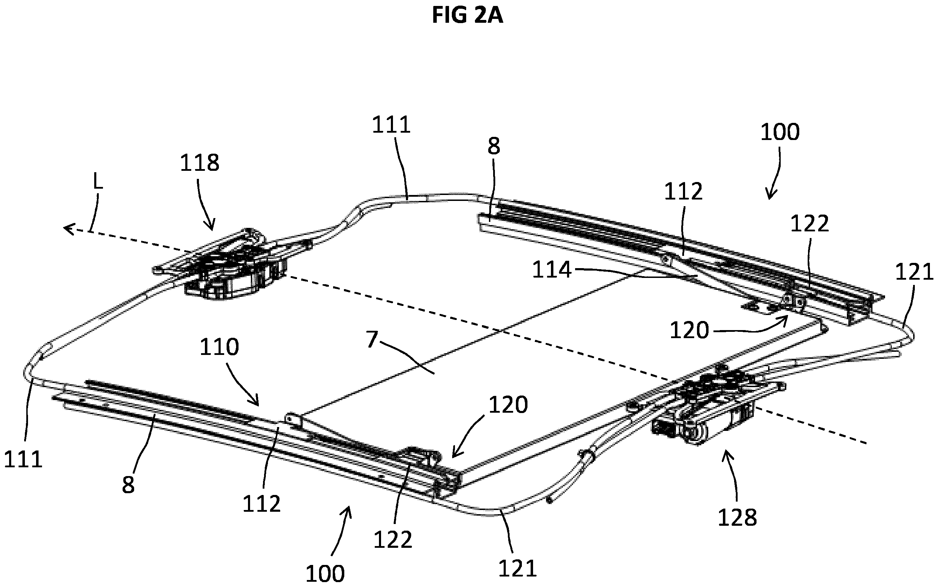

Die Figuren 2A bis 2E zeigen in einer jeweiligen perspektiven Ansicht ein Ausführungsbeispiel eines Dachsystems für das Fahrzeugdach 2 nach Figur 1 in verschiedenen Positionen einer Displayanordnung 7, welche mittels einer Vorrichtung 100 zuverlässig und komfortabel eingestellt werden können. Das Dachsystem weist ferner in Bezug auf eine Längsachse L seitlich angebrachte Führungsschienen 8 auf, die die Vorrichtung 100 mit dem Fahrzeugdach 2 koppeln und die zum Führen von Komponenten der Vorrichtung 100 ausgebildet sind.

Eine erste Antriebseinheit 118 und eine zweite Antriebseinheit 128 sind mit einem ersten Antriebskabel 111 und einem zweiten Antriebskabel 121 gekoppelt. Die erste und die zweite Antriebseinheit 118 und 128 umfassen vorzugsweise jeweils einen Elektromotor, mittels dessen das jeweilige erste Antriebskabel 111 und zweite Antriebskabel 121 antreibbar ist. Die erste Antriebseinheit 118 ist in oder an einem vorderen Bereich des Dachsystems angeordnet und zum Antreiben einer ersten Hebelmechanik 110 der Vorrichtung 100 ausgebildet. Die zweite Antriebseinheit 128 ist in oder an einem hinteren Bereich des Dachsystems angeordnet und zum Antreiben einer zweiten Hebelmechanik 120 der Vorrichtung 100 ausgebildet.

Im Rahmen dieser Beschreibung bezeichnen Begriffe, wie "oben", "unten", "vorne", "hinten", "links", "rechts" sowie "vertikal" und "horizontal", Richtungsangaben, Ausrichtungen oder Positionen, welche sich auf einen betriebsgemäßen Einsatz der Vorrichtung 100 in einem betriebsbereiten Kraftfahrzeug 1 gemäß der Figur 1 beziehen. Die eingezeichnete Längsachse L weist zudem ein Pfeilsymbol auf, welches zur besseren Orientierung eine übliche Fahrtrichtung andeutet. Die beschriebene Displayanordnung 7 ist insbesondere für Fahrzeuginsassen auf der hinteren Sitzbank vorgesehen, welche mittels der beschriebenen Vorrichtung 100 bei Bedarf einfach und komfortabel abgesenkt und ausgerichtet werden kann.

Die Längsachse L kann als Längsachse des Dachsystems, des Fahrzeugdachs 2, des Kraftfahrzeugs 1 und/oder der Vorrichtung 100 angesehen werden. In Bezug auf die in Figur 2A mittig dargestellte Längsachse L weist das Dachsystem zwei Vorrichtungen 100 auf, die auf gegenüberliegenden Seiten angeordnet und mit einer jeweiligen Führungsschiene 8 gekoppelt sind. Im Folgenden wird lediglich eine Vorrichtung 100 auf einer Seite des Dachsystems beziehungsweise des Fahrzeugdachs 2 beschrieben. Die weitere Vorrichtung 100 besitzt einen entsprechend analogen Aufbau, welcher hinsichtlich der Anordnung und Ausbildung der jeweiligen Komponenten spiegelsymmetrisch bezüglich der zentralen Längsachse L zu verstehen ist.

Die Vorrichtung 100 weist die erste und die zweite Hebelmechanik 110, 120 auf, die mit der Displayanordnung 7 gekoppelt sind. Die erste Hebelmechanik 110 ist zum Auf- und Einschwenken und Verfahren der Displayanordnung 7 ausgebildet. Die zweite Hebelmechanik 120 ist zum Einstellen eines vorgegebenen Ausrichtungswinkels A der Displayanordnung 7 ausgebildet. Die erste Hebelmechanik 110 weist das erste Antriebskabel 111, einen ersten Führungsgleiter 112 und eine Displayhebelanordnung 114, 115, 116 auf, die mittels der ersten Antriebseinheit 118 elektrisch verfahrbar sind. Die zweite Hebelmechanik 120 weist das zweite Antriebskabel 121, einen zweiten Führungsgleiter 122 und einen Kopplungshebel 127 auf, die mittels der zweiten Antriebseinheit 128 elektrisch verfahrbar sind. Der erste und der zweite Führungsgleiter 112, 122 sind mittels des Kopplungshebels 127 miteinander gekoppelt, sodass unabhängig von einer Position der Displayanordnung 7, die mittels der ersten Hebelmechanik 110 eingestellt ist, ein Abstand D zwischen dem ersten und dem zweiten Führungsgleiter 112, 122 und dadurch ein Ausrichtungswinkel A der Displayanordnung 7 mittels der zweiten Hebelmechanik 120 vorgegeben einstellbar sind.

Figur 2A zeigt die Displayanordnung 7 in einem eingeklappten Zustand in einer Ansicht von hinten links bezogen auf das betriebsbereite Kraftfahrzeug 1 gemäß Figur 1.

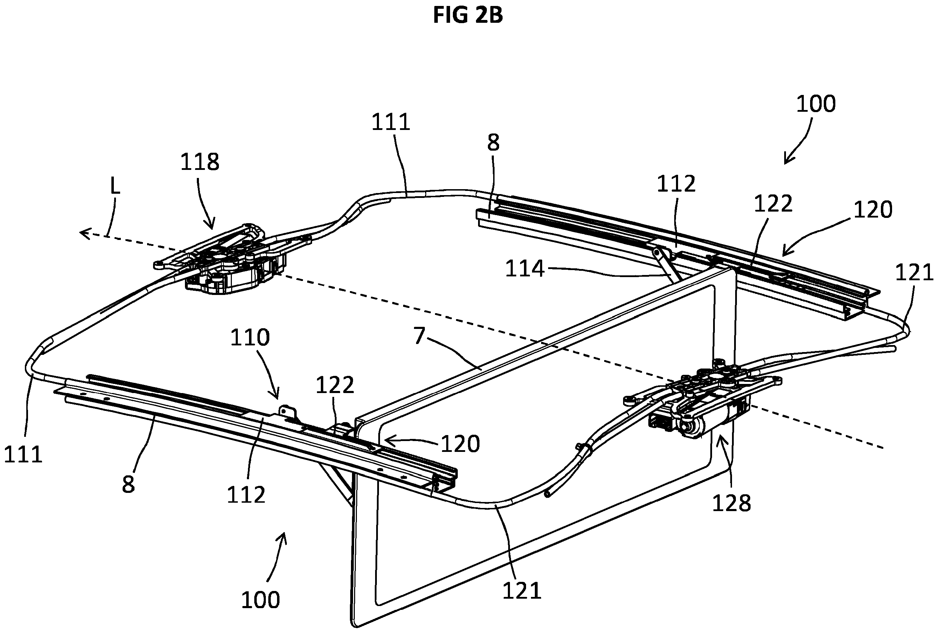

Figur 2B zeigt die Displayanordnung 7 in einer hinteren ausgeklappten Stellung.

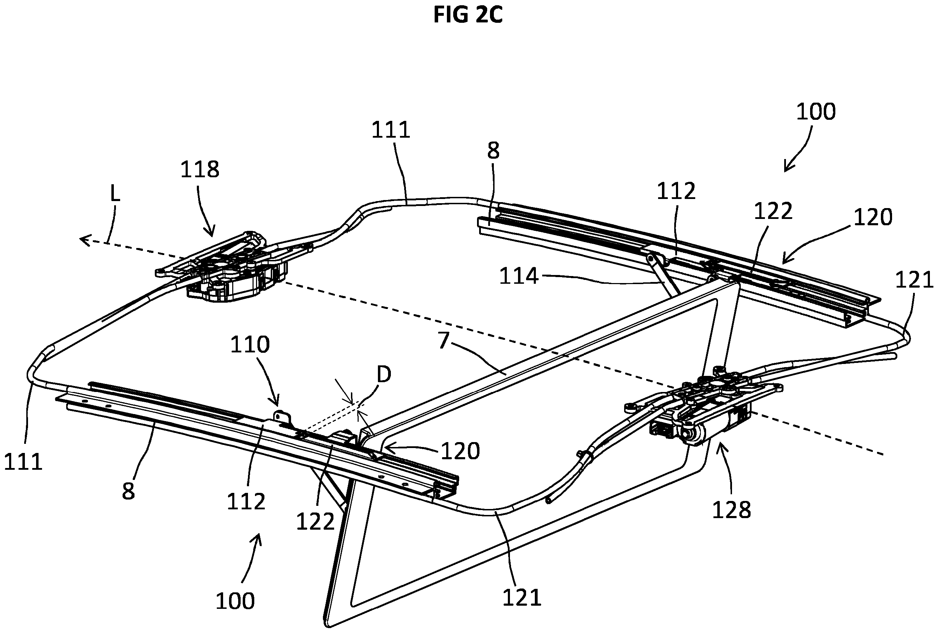

Figur 2C zeigt die Displayanordnung 7 in der hinteren ausgeklappten Stellung gemäß Figur 2B, welche zudem noch winkelverstellt ist. Auf diese Weise kann zum Beispiel bezogen auf eine vertikale Achse ein Ausrichtungswinkel von 15° eingestellt werden, um ein besonders angenehmes Betrachten der Displayanordnung 7 zu ermöglichen. Erreicht wird diese Winkeleinstellung durch das kontrollierte Ausbilden eines vorgegebenen Abstands D zwischen den Führungsgleitern 112 und 122.

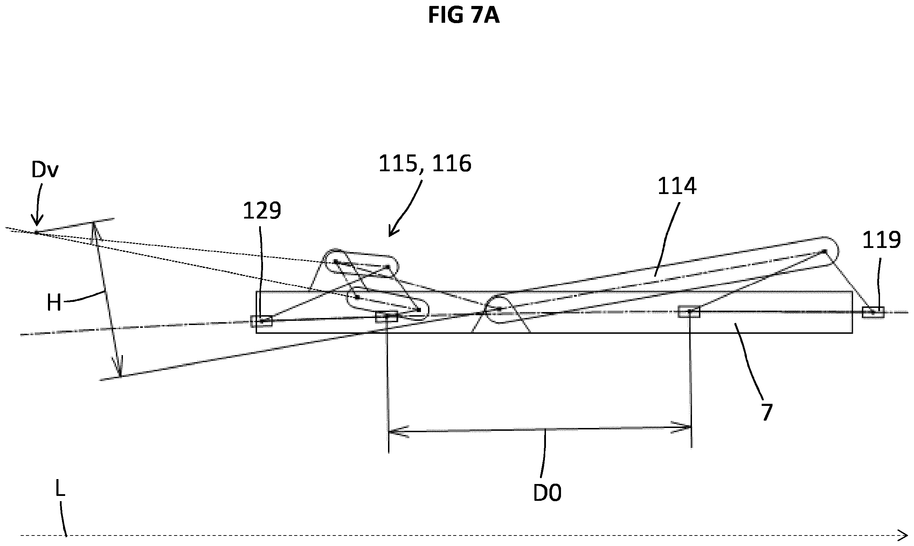

In einem eingeklappten Zustand gemäß Figur 2A, weisen die Führungsgleiter 112, 122 einen Abstand D0 auf, der bei einem Ausklappen auf einen ersten Abstand D1 verringert wird (vgl. Figuren 7A-7C). Gemäß Figur 2B ist der Abstand D1 zum Beispiel Null, sodass sich die Führungsgleiter 112, 122 kontaktieren. Alternativ kann der Abstand D1 auch größer Null ausgebildet sein und ein Neigen der Displayanordnung 7 in beide Richtungen nach vorne und nach hinten ermöglichen. Zum Einrichten einer gewünschten Displayneigung werden die Führungsgleiter 112, 122 wieder kontrolliert voneinander entfernt und der Abstand D1 auf einen Abstand D2 gezielt vergrößert.

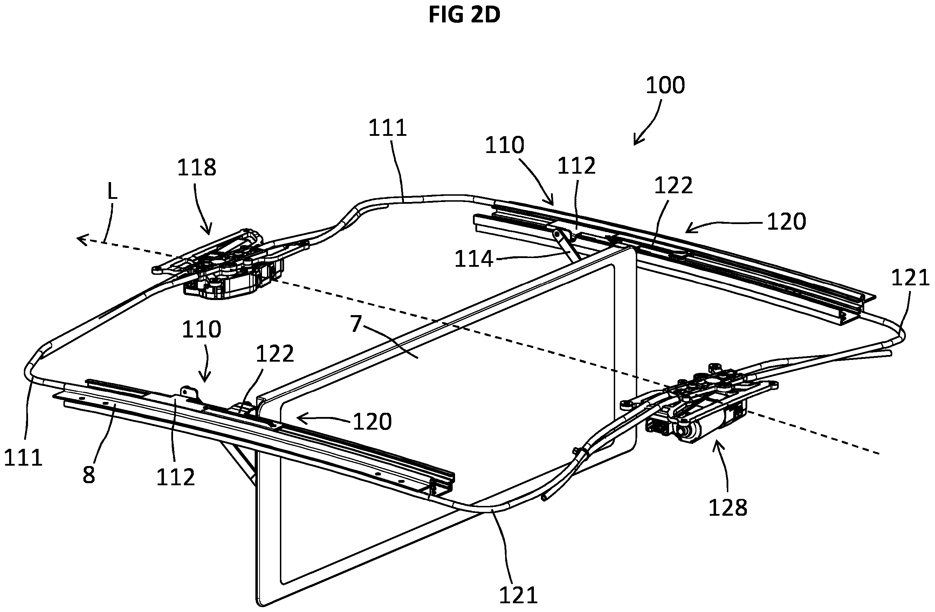

Figur 2D zeigt die Displayanordnung 7 in einer ausgeklappten nach vorne verfahrenen Stellung. Dies kann ausgehend von der ausgeklappten Stellung gemäß Figur 2B erfolgen, indem mittels der ersten Hebelmechanik 110 die Führungsgleiter 112, 122 nach vorne getrieben werden. Alternativ kann dies auch ausgehend vom ausgerichteten Zustand gemäß Figur 2C erfolgen, indem die winkelverstellte Displayanordnung 7 nach vorne verfahren wird und darauf folgend der eingestellte Ausrichtungswinkel A wieder zurückgenommen bzw. auf im Wesentlichen 0° eingestellt wird.

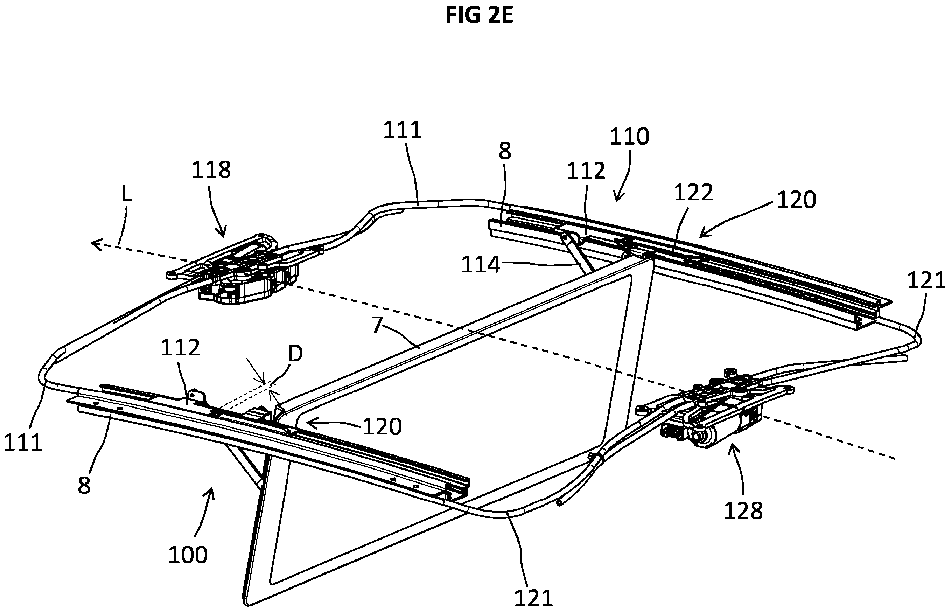

Figur 2E zeigt die Displayanordnung 7 in einer nach vorne verfahrenen, vorderen Stellung, in welcher zudem ein Ausrichtungswinkel von beispielsweise 10°, 15° oder 20° zur Vertikalen eingestellt ist. Die Winkelverstellung ist dabei kontinuierlich möglich, sodass ein gewünschter Ausrichtungswinkel A bis zu einem maximal vorgegebenen Winkelwert einstellbar ist.

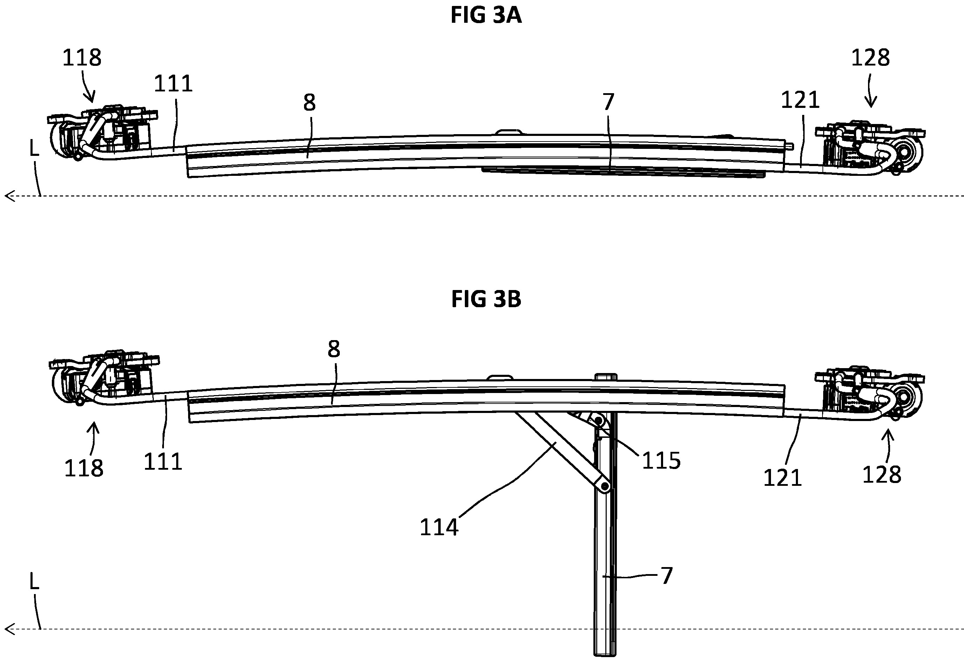

Die Figuren 3A bis 3E zeigen die Displayanordnung 7 in verschiedenen Positionen in einer jeweiligen Seitenansicht von links außen. Figur 3A zeigt die Displayanordnung 7 in einem eingeklappt Zustand.

Figur 3B zeigt die Displayanordnung 7 in einem ausgeklappten Zustand in einer hinteren Stellung.

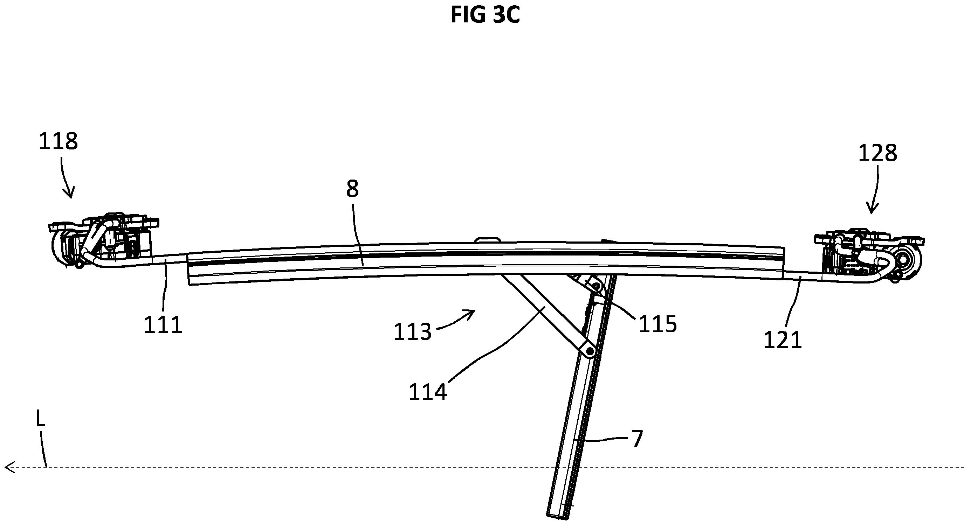

Figur 3C zeigt die Displayanordnung 7 in einer hinteren, winkelverstellten Stellung, in welcher der Ausrichtungswinkel A zum Beispiel einen Wert von 15° zur Vertikalen aufweist.

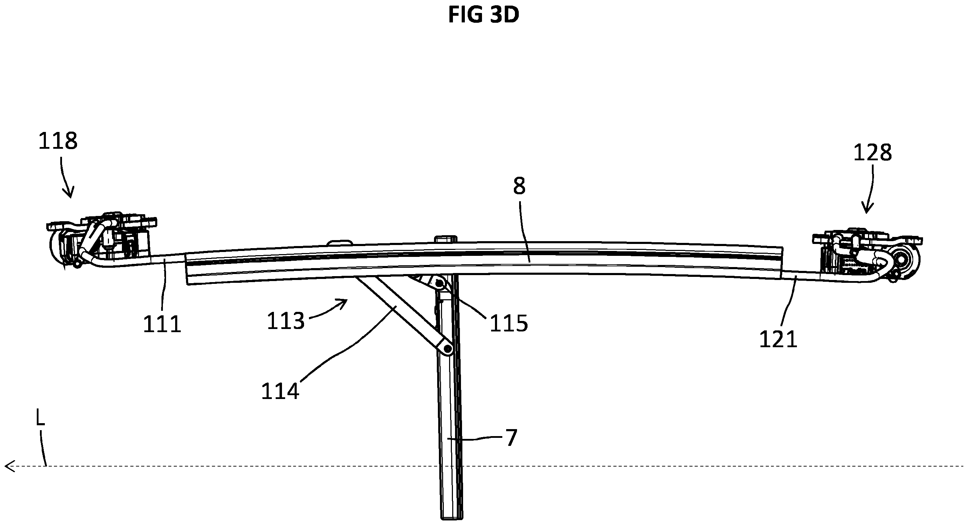

Figur 3D zeigt die Displayanordnung 7 in vorderen Stellung.

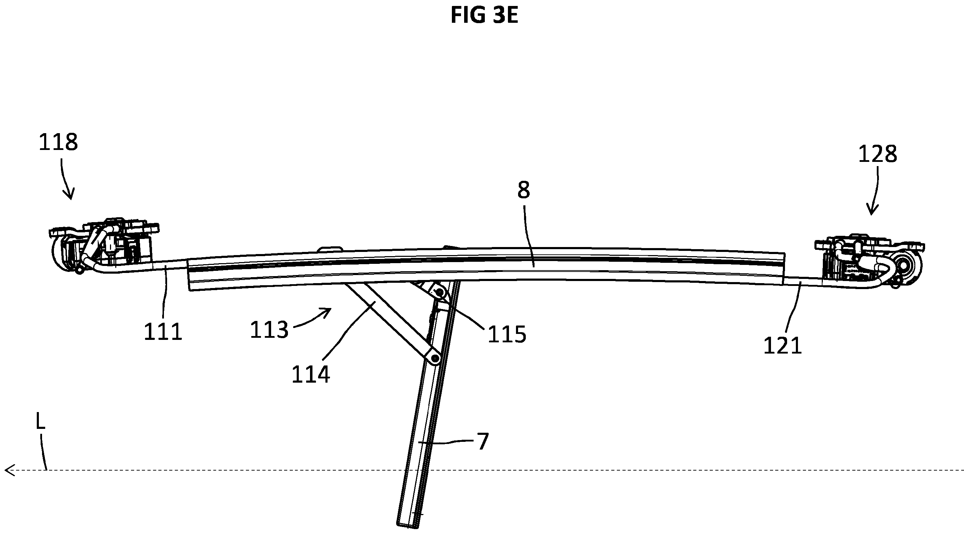

Figur 3E zeigt die Displayanordnung 7 in einer nach vorne verfahrenen, winkelverstellten Stellung, in welcher der Ausrichtungswinkel A zum Beispiel einen Wert von 15° zur Vertikalen aufweist.

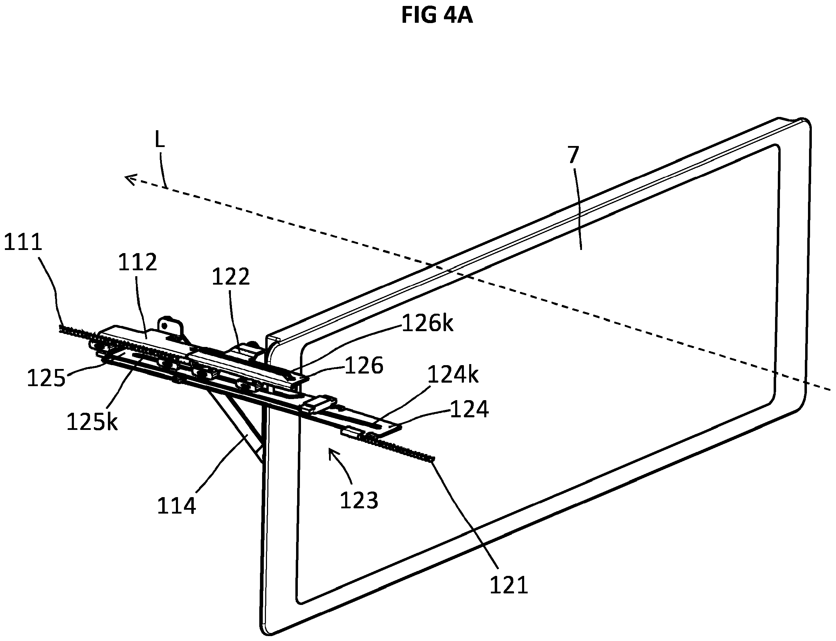

Figur 4A zeigt die Displayanordnung 7 in einer hinteren, ausgeklappten Stellung mit Blick auf die Winkelverstellmechanik gemäß einer Ansicht von hinten oben links. Zur besseren Anschaulichkeit ist die Führungsschiene 8 ausgeblendet.

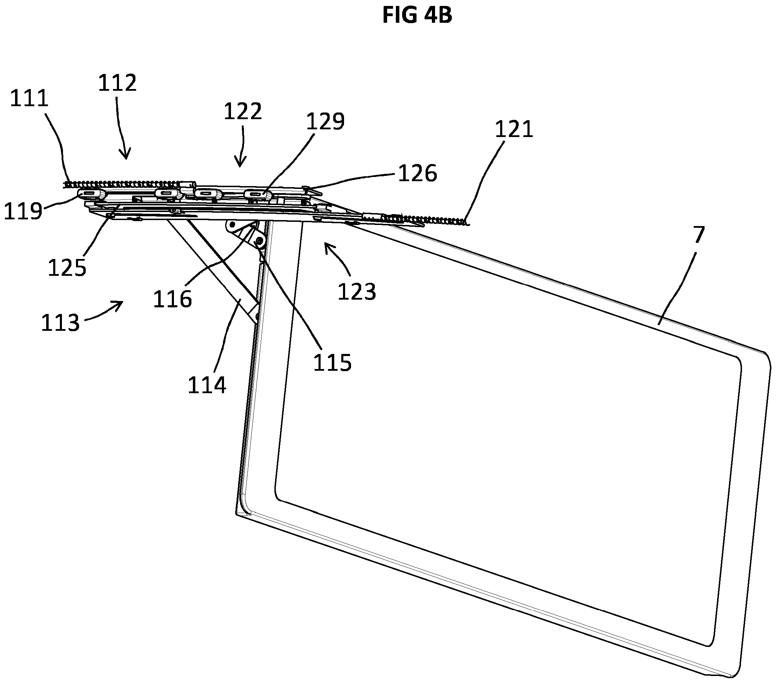

Figur 4B zeigt die Displayanordnung 7 in einer hinteren, ausgeklappten Stellung mit Blick auf die Winkelverstellmechanik gemäß einer Ansicht von hinten unten links. Die Führungsgleiter 112 und 122 weisen jeweils zwei Gleitfüße 119 bzw. 129 auf, mit denen sie innerhalb eines Gleitkanals der Führungsschiene 8 geführt gleiten können.

Ein Ausklappen der Displayanordnung 7 erfolgt mittels der ersten Hebelmechanik 110, welche unter anderem die Displayhebelanordnung in Ausführung einer ersten Hebelanordnung 113 mit einem Hauptlenker 114, einem ersten Kipp- oder Schwenkhebel 115 und einem zweiten Kipp- oder Schwenkhebel 116 umfasst. Die Displayhebelanordnung 114, 115, 116 ist schwenkbar mit dem ersten Führungsgleiter 112 gekoppelt. Der Hauptlenker 114 ist einerseits schwenkbar mit dem ersten Führungsgleiter 112 und anderseits schwenkbar mit der Displayanordnung 7 gekoppelt. Der erste Schwenkhebel 115 ist einerseits schwenkbar mit der Displayanordnung 7 und anderseits schwenkbar mit dem zweiten Führungsgleiter 122 gekoppelt. Der zweite Schwenkhebel 116 ist einerseits schwenkbar mit dem zweiten Führungsgleiter 122 und anderseits schwenkbar mit der Displayanordnung 7 gekoppelt.

Das erste Antriebskabel 111 ist mit dem zweiten Führungsleiter 122 gekoppelt ist, sodass mittels Betätigen des ersten Antriebskabels 111 der zweite Führungsgleiter 122 auf den ersten Führungsgleiter 112 zubewegt und der Abstand D zwischen den beiden Führungsgleitern 112 und 122 verkleinert wird (vgl. Figuren 4A bis 5E). Ab einem vorgegebenen Abstand zwischen den Führungsgleitern 112 und 122, beispielsweise an einer Position, in welcher die Displayanordnung 7 vertikal ausgeklappt ist, koppelt der zweite Führungsgleiter 122 mit dem ersten Führungsgleiter 112 und treibt diesen zum weiteren Verfahren der ausgeklappten Displayanordnung 7 in Richtung der Längsachse L vor sich her.

Mittels Verfahren des zweiten Antriebskabels 121, das mittels einer zweiten Hebelanordnung 123 mit dem zweiten Führungsleiter 122 gekoppelt ist, und kann der Abstand zwischen den Führungsgleitern 112 und 122 gezielt vergrößert werden, um ein Einstellen eines vorgegebenen Ausrichtungswinkels A der Displayanordnung 7 zu ermöglichen. Die zweite Hebelanordnung 123 umfasst dabei einen ersten Schwenkhebel 124, einen zweiten Schwenkhebel 125 und einen Führungshebel 126 mit jeweiligen Kulissen 124k, 125k und 126k, die eine horizontale Führung in der x-y-Ebene vorgeben (s. Figur 1). Die Schwenkhebel 124, 125 können jeweils auch als Verstellgleiter 124, 125 bezeichnet werden, die angetrieben von der zweiten Antriebseinheit 128 eine in der Führungsschiene 8 gleitende Bewegung zum Verstellen der Displayanordnung 7 ausführen. Der Führungshebel 126 der zweiten Hebelanordnung 123 kann auch als Führungselement 126 bezeichnet werden, das bei Betätigung im Zusammenwirken mit dem Kopplungshebel 127 und dem ersten Führungsgleiter 112 eine führende Bewegung zum Ausrichten der Displayanordnung 7 ausführt. Der erste Verstellgleiter 124 ist einerseits mit dem zweiten Antriebskabel 121 und andererseits mit dem zweiten Verstellgleiter 125 gekoppelt, welcher Kopplungselemente, beispielsweise in Form von Zylinderstiften, aufweist, die in die Kulisse 124k des ersten Verstellgleiters 124 eingreifen.

Der zweite Verstellgleiter 125 ist einerseits mit dem ersten Verstellgleiter 124 und andererseits mit dem Führungselement 126 gekoppelt. Die Kopplung zwischen dem Führungselement 126 und dem zweiten Verstellgleiter 125 erfolgt mittels des Kopplungshebels 127, welcher zudem die beiden Führungsgleiter 112 und 122 miteinander koppelt. Der Kopplungshebel 127 weist beidseitig, also an einer Oberseite und einer Unterseite Kopplungselemente, beispielsweise in Form von Zylinderstiften, auf, die einerseits in die Kulisse 125k des zweiten Verstellgleiters 125 und andererseits in die Kulisse 126k des Führungselements 126 vertikal eingreifen. Zudem weist der Kopplungshebel 127 ein weiteres Kopplungselement auf, das in eine dafür vorgesehene Kopplungsöffnung an dem ersten Führungsgleiter 112 eingreift und die mechanische Kopplung zwischen den beiden Führungsgleitern 112 und 122 ausbildet.

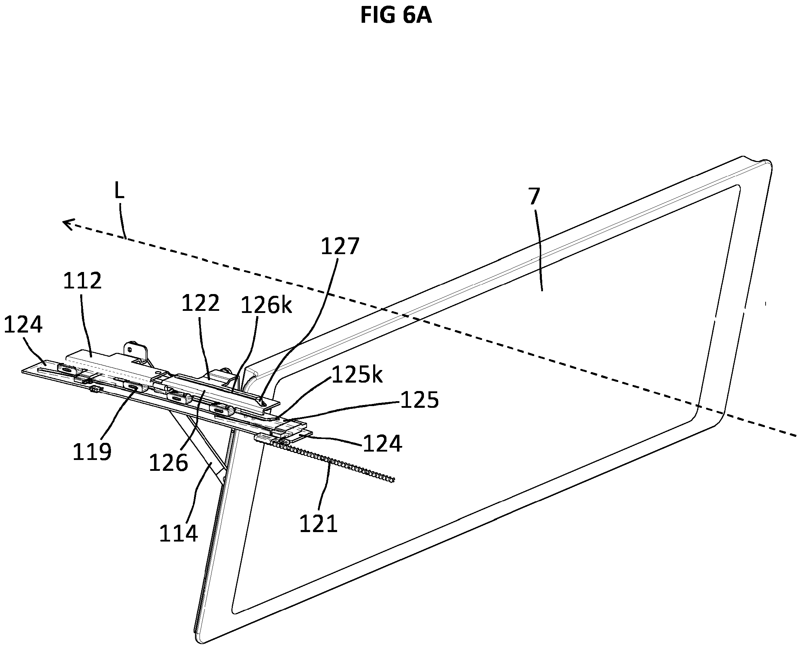

Das Führungselement 126 ist vorzugsweise, wie in den illustrierten Ausführungsbeispielen dargestellt, einstückig mit dem zweiten Führungsgleiter 122 ausgebildet und zum Beispiel in ein sich horizontal erstreckendes plattenförmiges Element des zweiten Führungsgleiters 122 integriert (s. Figuren 4A und 6A). Alternativ kann das Führungselement 126 auch ein zu dem zweiten Führungsgleiter 122 separates Element der zweiten Hebelanordnung 123 ausbilden und mit dem zweiten Führungsgleiter 122 fest verbunden sein.

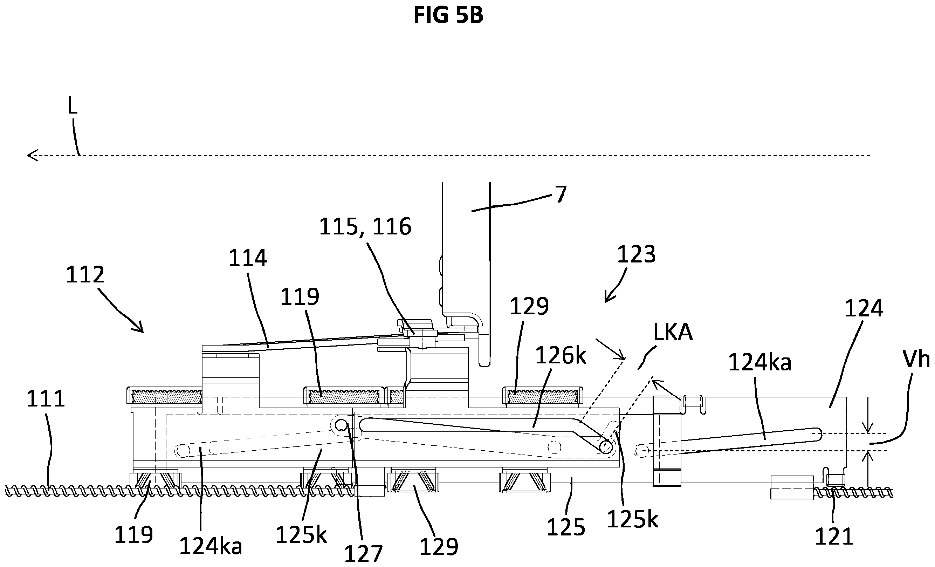

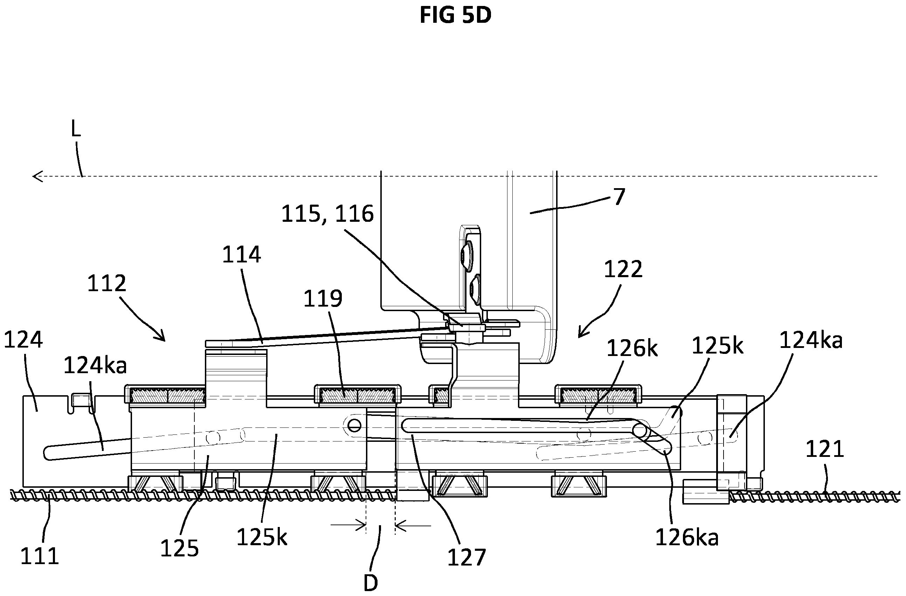

Die Kulissen 124k, 125k und 126k bilden jeweils bezogen auf eine horizontale Ebene beidseitig abgeschlossene Führungsbahnen aus, deren gegenüberliegende Enden ebenfalls geschlossen sein können und eine Anschlags- oder Endposition der jeweiligen Kulissenbahn ausbilden (vgl. Figuren 5B und 5D) .

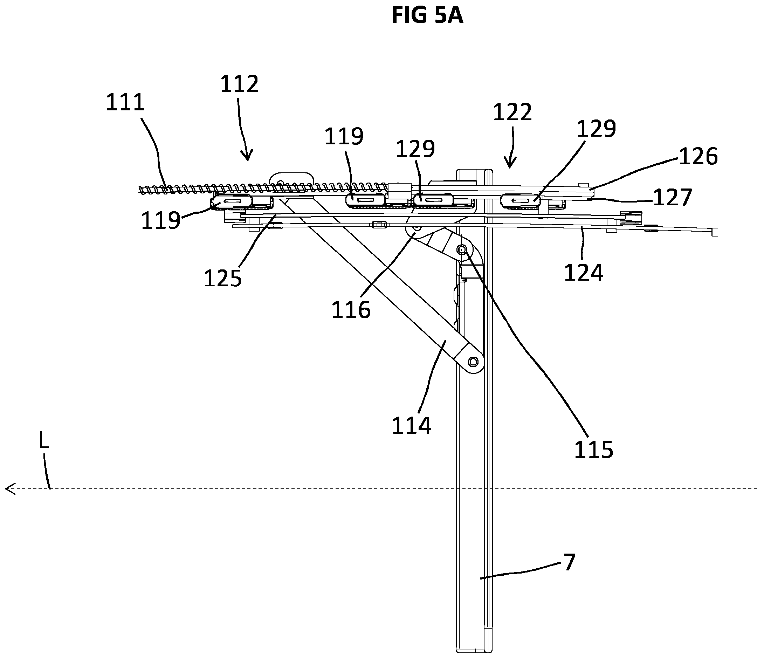

Figur 5A zeigt die Displayanordnung 7 in einer hinteren, ausgeklappten Stellung mit Blick auf die Winkelverstellmechanik gemäß einer Ansicht von links. Zur besseren Anschaulichkeit ist die Führungsschiene 8 ausgeblendet.

Figur 5B zeigt die Displayanordnung 7 in einer hinteren, ausgeklappten Stellung mit Blick auf die Winkelverstellmechanik in einer Draufsicht bzw. einer Ansicht von oben. Anhand dieser Darstellung sind die Kulissen 124k, 125k und 126k der jeweiligen Verstellgleiter 124, 125 und des Führungselements 126 zu erkennen. Die Kulisse 124k ist zweiteilig ausgeführt und weist in einem vorderen und einem hinteren Bereich jeweils einen schräg verlaufenden Kulissenabschnitt 124ka auf, in die ein jeweiliger Kopplungsstift des darüber angeordneten zweiten Verstellgleiters 125 eingreift. Die Länge und schräge Ausrichtung der Kulissenabschnitte 124ka bestimmen einen horizontalen Versatz Vh hinsichtlich der in Figur 1 eingezeichneten y-Richtung, welcher mittels der zweiten Hebelanordnung 123 und der Kopplung zwischen den Führungsgleitern 112 und 122 in eine Abstandsänderung zwischen den Führungsgleitern 112 und 122 und eine Winkelverstellung der Displayanordnung 7 überführt wird.

Ein solches Einrichten des Ausrichtungswinkels A und der zum Einstellen mögliche Winkelbereich werden ferner durch einen schräg verlaufenden Kulissenabschnitt 126ka beeinflusst, welcher eine vorgegebene Länge LKA und einen vorgegebenen Winkel zur Längsachse L einschließt. Auf diese Weise kann der mögliche Winkelbereich sowie eine Einstellgeschwindigkeit der Displayanordnung mitbestimmt werden.

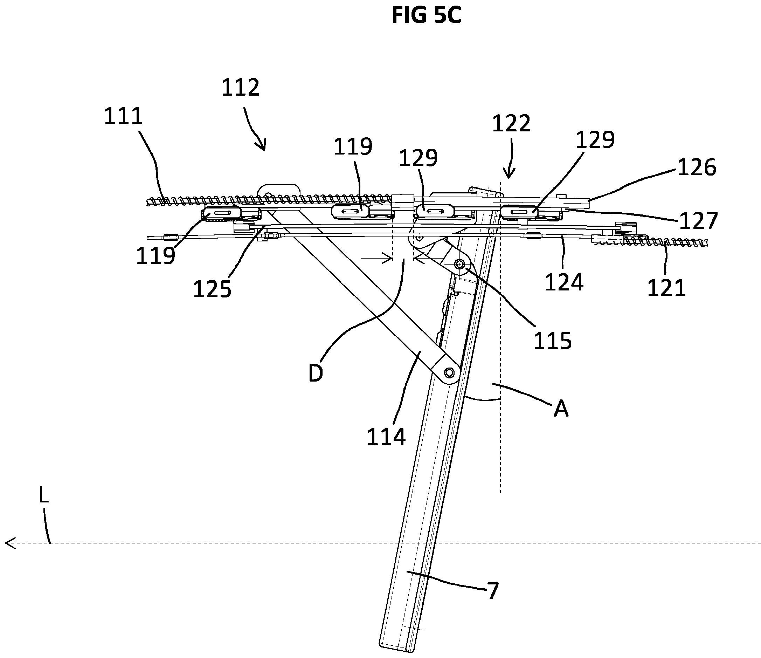

Figur 5C zeigt die Displayanordnung 7 in einer hinteren, ausgeklappten Stellung mit Blick auf die Winkelverstellmechanik gemäß einer Ansicht von links.

Figur 5D zeigt die Displayanordnung 7 in einer hinteren, ausgeklappten Stellung mit Blick auf die Winkelverstellmechanik in einer Draufsicht bzw. einer Ansicht von oben.

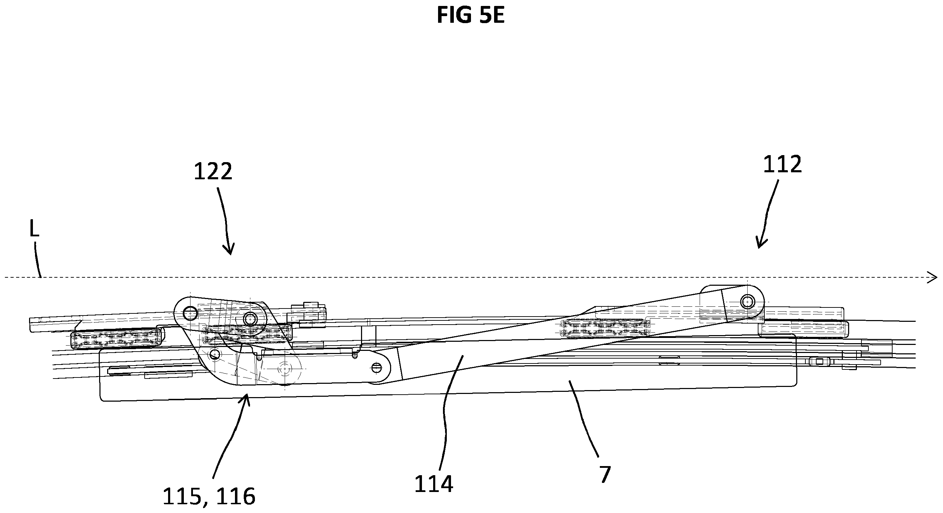

Figur 5E zeigt die Displayanordnung 7 in einer eingeklappten Stellung, welche zum Beispiel eine Parkposition repräsentiert, in von einer Fahrzeugmitte aus mit Blickrichtung nach links außen.

Figur 6A zeigt die Displayanordnung 7 in einer hinteren, ausgeklappten und winkelverstellten Stellung mit Blick auf die Winkelverstellmechanik gemäß einer Ansicht von hinten links.

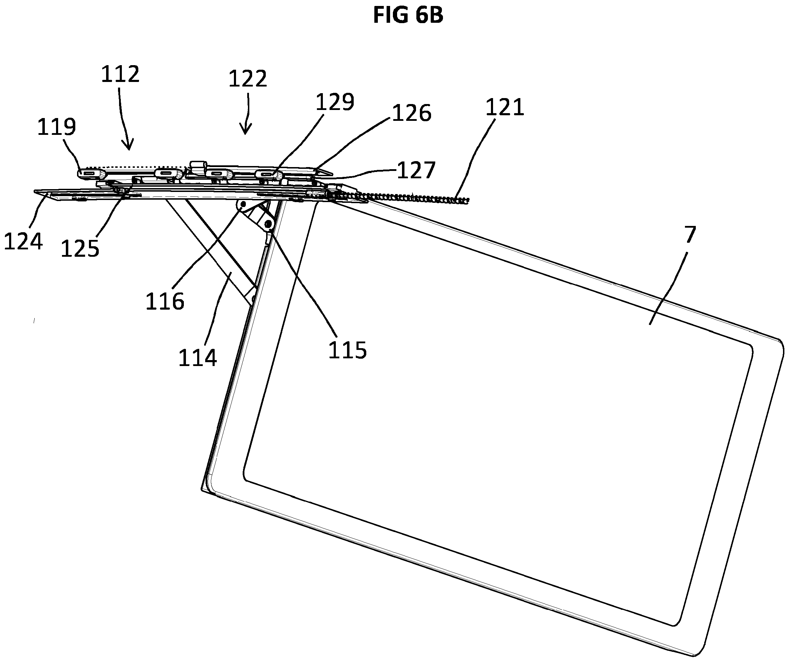

Figur 6B zeigt die Displayanordnung 7 in einer hinteren, ausgeklappten und winkelverstellten Stellung mit Blick auf die Winkelverstellmechanik gemäß einer Ansicht von hinten unten links.

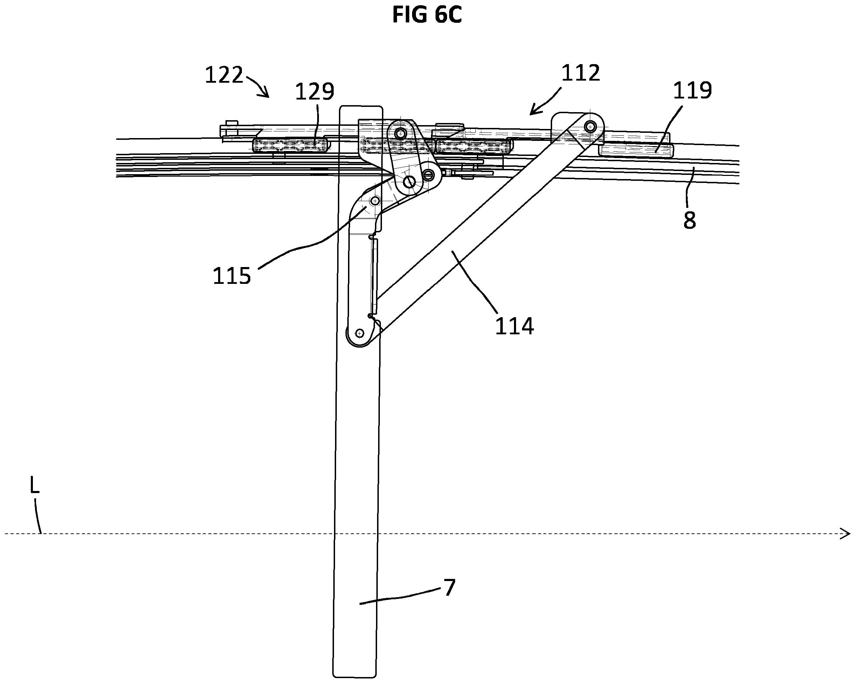

Figur 6C zeigt die Displayanordnung 7 in einer hinteren, ausgeklappten Stellung mit Blick auf die Verstellmechanik gemäß einer Ansicht von einer Fahrzeugmitte aus mit Blickrichtung nach links außen.

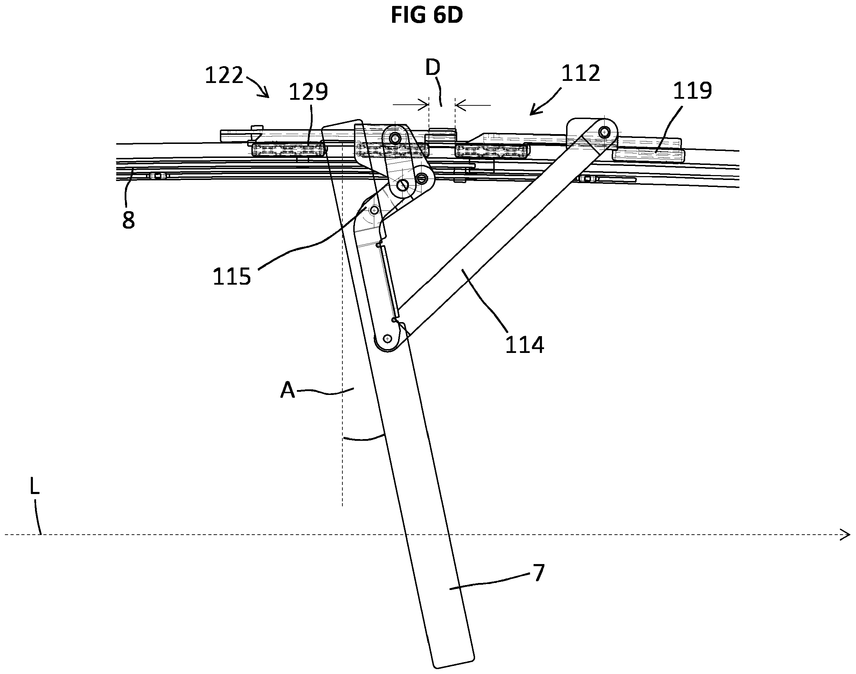

Figur 6D zeigt die Displayanordnung 7 in einer hinteren, ausgeklappten und winkelverstellten Stellung mit Blick auf die Verstellmechanik gemäß einer Ansicht von einer Fahrzeugmitte aus mit Blickrichtung nach links außen.

Figur 7A zeigt die Hebelmechanik der Vorrichtung 100 in einer schematischen Darstellung, in welcher die Displayanordnung eingeklappt ist. Die Ansicht entspricht einer Sicht von der Fahrzeugmitte aus mit Blickrichtung nach links außen, wieder bezogen auf eine übliche Fahrtrichtung des Kraftfahrzeugs 1. An dem oberen Rand der Displayanordnung 7 ist ein Viergelenk eingesetzt, welches durch die erste Hebelanordnung 113 gebildet ist, damit der antreibende Hauptlenker 114 einen ausreichenden Hebelarm H besitzt, um die Displayanordnung 7 zuverlässig aus- und wieder einzuklappen. Der dargestellte Hebelarm H vollzieht eine Bewegung bezüglich eines virtuellen Drehpunkts Dv und ermöglicht daher einen besonders flachen und platzsparenden Aufbau der Vorrichtung 100. Der virtuelle Drehpunkt bildet dabei einen Momentanpol des Viergelenks aus. Alternativ ist auch ein einfacher Drehpunkt denkbar, bei welchem allerdings ein nach oben eingeschränkter Bauraum zu berücksichtigen ist.

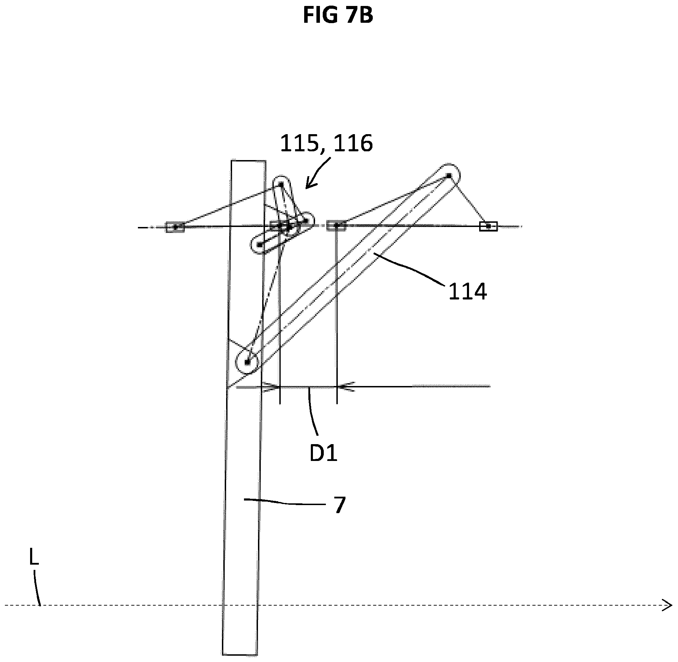

Figur 7B zeigt die Hebelmechanik der Vorrichtung 100 nach Figur 7A in einem ausgeklappten Zustand. Zum Ausklappen der Displayanordnung 7 wird der Abstand D0 zwischen den Führungsgleitern 112 und 122 der eingeklappten Displayanordnung 7 auf den ersten Abstand D1 reduziert.

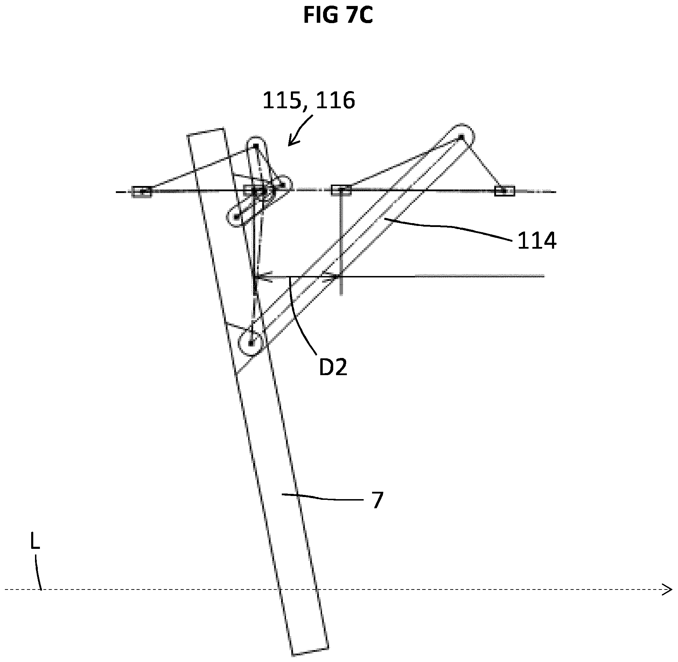

Figur 7C zeigt die Hebelmechanik der Vorrichtung 100 nach den Figuren 7A und 7B in einem ausgeklappten und winkelverstellten Zustand in symbolhafter Darstellung. Zum Durchführen der Winkelverstellung und Einrichten eines gewünschten Ausrichtungswinkels A wird der erste Abstand D1 zwischen den beiden Führungsgleitern 112 und 122 auf den zweiten Abstand D2 erhöht. Ein Vergrößern des Abstandes D1 auf einen Wert D2 ist während des ganzen Verfahrwegs der Displayanordnung 7 entlang der Längsachse L bzw. der Führungsschienen 8 möglich.

Die beschriebene Zuordnung einzelner Elemente zu der ersten oder zweiten Hebelmechanik 110 und 120 ist nicht zwingend und kann auch anders bezeichnet sein. Insgesamt weist die Vorrichtung 100 zusammenwirkende Hebel- und Führungselemente auf, die eine platzsparende Mechanik zum komfortablen und zuverlässigen Einstellen der Displayanordnung 7 ermöglichen.

In Bezug auf gegenwärtige Ausgestaltungen von Fahrzeugdächern und Displayanordnungen ist eine Kosteneinsparung durch Verwendung einfacher Elektroantriebe 118, 128 möglich und zudem kann eine vertikale Platzersparnis erreicht werden. Die beiden Führungsgleiter 112, 122 ermöglichen sowohl das Abklappen und Einklappen und das Verfahren als auch die Winkelverstellung der Displayanordnung 7. Vorzugsweise ist der Winkelverstellmotor bzw. die zweite Antriebseinheit 128 fest verbaut, sodass keine Verlegung von bewegten Kabeln auf den Bildschirm erforderlich ist, wie es zum Beispiel bei einem Verstellmotor auf der Displayrückseite vorzusehen ist. Die beschriebene Verstellmechanik ist im Wesentlichen horizontal angeordnet, in deren Richtung im Gegensatz zur vertikalen Richtung mehr Bauraum zur Verfügung steht.

### Bezugszeichenliste

- 1: Kraftfahrzeug
- 2: Fahrzeugdach
- 5: Deckel
- 7: Displayanordnung
- 8: Führungsschiene
- 100: Vorrichtung
- 110: erste Hebelmechanik
- 111: erstes Antriebskabel
- 112: erster Führungsgleiter
- 113: erste Hebelanordnung
- 114: Hauptlenker der ersten Hebelanordnung
- 115: erster Schwenkhebel der ersten Hebelanordnung
- 116: zweiter Schwenkhebel der ersten Hebelanordnung
- 118: erste Antriebseinheit
- 119: Gleitfuß des ersten Führungsgleiters
- 120: zweite Hebelmechanik
- 121: zweites Antriebskabel
- 122: zweiter Führungsgleiter
- 123: zweite Hebelanordnung
- 124: erster Schwenkhebel/Verstellgleiter der zweiten Hebelanordnung
- 124k: Kulisse des ersten Schwenkhebels/Verstellgleiters
- 124ka: Kulissenabschnitt der Kulisse des ersten Schwenkhebels/Verstellgleiters
- 125: zweiter Schwenkhebel/Verstellgleiter der zweiten Hebelanordnung
- 125k: Kulisse des zweiten Schwenkhebels/Verstellgleiters
- 126: Führungshebel/Führungselement der zweiten Hebelanordnung
- 126k: Kulisse des Führungshebels/Führungselements
- 126ka: Kulissenabschnitt der Kulisse des Führungshebels/Führungselements
- 127: Kopplungshebel
- 128: zweite Antriebseinheit
- 129: Gleitfuß des zweiten Führungsgleiters

- A: Ausrichtungswinkel
- D: Gleiterabstand
- D0: Gleiterabstand im eingeklappten Zustand
- D1: erster Gleiterabstand im ausgeklappten Zustand
- D2: zweiter Gleiterabstand im ausgeklappten und winkelverstellten Zustand
- Dv: virtueller Drehpunkt
- H: Hebelarm
- L: Längsachse / Fahrtrichtung
- LKA: Länge des Kulissenabschnitts der Kulisse des Führungshebels/Führungselements
- Vh: horizontaler Versatz

## Patentansprüche

1. Vorrichtung (100) zum Einstellen einer Displayanordnung (7) für ein Fahrzeugdach (2), umfassend:
- eine erste Hebelmechanik (110), die mit der Displayanordnung (7) koppelbar ist und die zum Auf- und Einschwenken und zum Verfahren der Displayanordnung (7) ausgebildet ist, und
- eine zweite Hebelmechanik (120), die mit der Displayanordnung (7) koppelbar ist und die zum Einstellen eines vorgegebenen Ausrichtungswinkels (A) der Displayanordnung (7) ausgebildet ist,
wobei die erste Hebelmechanik (110) einen ersten Führungsgleiter (112) umfasst, der mittels einer ersten Antriebseinheit (118) elektrisch verfahrbar ist, **dadurch gekennzeichnet, dass** die erste Hebelmechanik (110) ferner ein erstes Antriebskabel (111) und eine Displayhebelanordnung (114, 115, 116) aufweist, die mittels der ersten Antriebseinheit (118) elektrisch verfahrbar sind,
wobei die zweite Hebelmechanik (120) ein zweites Antriebskabel (121) und einen zweiten Führungsgleiter (122) aufweist, die mittels einer zweiten Antriebseinheit (128) elektrisch verfahrbar sind,
wobei der erste und der zweite Führungsgleiter (112, 122) hinsichtlich eines gemeinsamen Bezugspunkts zumindest abschnittsweise mit unterschiedlichen Bewegungsgeschwindigkeiten verfahrbar sind, sodass unabhängig von einer Position der Displayanordnung (7), die mittels der ersten Hebelmechanik (110) eingestellt ist, bezogen auf eine Längsachse (L) der Vorrichtung (100) ein Abstand (D) zwischen dem ersten und dem zweiten Führungsgleiter (112, 122) und dadurch ein Ausrichtungswinkel (A) der Displayanordnung (7) mittels der zweiten Hebelmechanik (120) vorgegeben einstellbar ist.

2. Vorrichtung (100) nach Anspruch 1, bei der die zweite Hebelmechanik (120) ferner einen Kopplungshebel (127) aufweist, der den ersten und zweiten Führungsgleiter (112, 122) miteinander koppelt.

3. Vorrichtung (100) nach Anspruch 2, bei der die zweite Hebelmechanik (120) eine zweite Hebelanordnung (123) aufweist, die mit dem zweiten Antriebskabel (121) und mittels des Kopplungshebels (127) mit dem zweiten Führungsgleiter (122) gekoppelt ist und die dazu eingerichtet ist, einen horizontalen Versatz (Vh) in einer horizontalen Ebene, die senkrecht zu einer Haupterstreckungsebene der ausgeklappten Displayanordnung (7) ist, in eine Änderung des Abstandes (D) zwischen den Führungsgleitern (112, 122) zu überführen.

4. Vorrichtung (100) nach Anspruch 2 oder 3, bei der die zweite Hebelanordnung (123) einen ersten Schwenkhebel (124), einen zweiten Schwenkhebel (125) und einen Führungshebel (126) mit jeweiligen Kulissen (124k, 125k, 126k) aufweist, die mit dem zweiten Antriebskabel (121) und mit dem Kopplungshebel (127) gekoppelt sind und die mittels der durch die jeweiligen Kulissen (124k, 125k, 126k) vorgegebenen Führung dazu ausgebildet sind, einen vorgegebenen Abstand (D, D0, D1, D2) zwischen den Führungsgleitern (112, 122) einzustellen.

5. Vorrichtung (100) nach Anspruch 4, bei der der erste Schwenkhebel (124) und der Führungshebel (126) in den zugehörigen Kulissen (124k, 126k) jeweils einen länglichen Kulissenabschnitt (124ka, 126ka) aufweisen, der relativ zu der Längsachse (L) schräg verläuft und eine vorgegebene Länge (LKA) aufweist und in einer horizontalen Ebene einen vorgegebenen Winkel zu der Längsachse (L) einschließt.

6. Vorrichtung (100) nach Anspruch 5, bei der die vorgegebene Länge (LKA) und der vorgegebene Winkel der länglichen Kulissenabschnitte (124ka, 126ka) relativ zu der Längsachse (L) in Abhängigkeit von einer Einstellgeschwindigkeit zum Einstellen eines vorgegebenen Ausrichtungswinkels (A) der Displayanordnung (7) ausgebildet sind.

7. Vorrichtung (100) nach einem der Ansprüche 1 bis 6, bei der das erste Antriebskabel (111) mit dem zweiten Führungsgleiter (122) gekoppelt ist, sodass der erste Führungsgleiter (112) mittels des zweiten Führungsgleiters (122) antreibbar ist.

8. Vorrichtung (100) nach einem der Ansprüche 1 bis 7, umfassend:
eine erste Antriebseinheit (118), die mit dem ersten Antriebskabel (111) gekoppelt ist, und eine zweite Antriebseinheit (128), die mit dem zweiten Antriebskabel (121) gekoppelt ist, wobei die erste und/oder die zweite Antriebseinheit (118, 128) einen Elektromotor aufweist, der zum Auf- und Einschwenken und zum Verfahren der Displayanordnung (7) mit dem ersten Antriebskabel (111) und/oder der zum Einstellen eines Abstands (D) zwischen den Führungsgleitern (112, 122) und zum Einstellen eines Ausrichtungswinkels (A) der Displayanordnung (7) mit dem zweiten Antriebskabel (121) gekoppelt ist.

9. Vorrichtung nach Anspruch 8, bei der die erste und/oder die zweite Antriebseinheit (118, 128) so ausgebildet sind, dass der erste und der zweite Führungsgleiter (112, 122) hinsichtlich eines gemeinsamen Bezugspunkts zumindest abschnittsweise mit unterschiedlichen Bewegungsgeschwindigkeiten verfahrbar sind.

10. Vorrichtung nach Anspruch 9, bei der die unterschiedlichen Geschwindigkeiten des ersten und des zweiten Führungsgleiters (112, 122) mittels einer elektronischen Drehzahlregelung der ersten und/oder der zweiten Antriebseinheit (118, 128) einstellbar sind.

11. Fahrzeugdach (2) für ein Kraftfahrzeug (1), umfassend:
- Führungsschienen (8), die in Bezug auf eine Längsachse (L) des Fahrzeugdachs (2) auf gegenüberliegenden Seiten des Fahrzeugdachs (2) angeordnet sind, und
- eine Vorrichtung (100) zum Einstellen einer Displayanordnung (7) nach einem der Ansprüche 1 bis 10, die mittels der Führungsschienen (8) mit dem Fahrzeugdach (2) gekoppelt ist.

12. Verfahren zum Einstellen einer Displayanordnung (7) für ein Fahrzeugdach (2), umfassend:
- Betätigen einer ersten Hebelmechanik (110) mittels Verfahren eines ersten Antriebskabels (111) und eines an dem ersten Antriebskabel (111) gekoppelten Führungsgleiters (112, 122), der mittels einer schwenkbaren Displayhebelanordnung (114, 115, 116) mit der Displayanordnung (7) gekoppelt ist, und dadurch Schwenken der Displayanordnung (7) und Ausbilden eines ausgeklappten Zustands der Displayanordnung (7), und
- Betätigen einer zweiten Hebelmechanik (120) mittels Verfahren eines zweiten Antriebskabels (121) und Bewegen eines an dem zweiten Antriebskabel (121) gekoppelten zweiten Führungsgleiters (122), der mit der Displayanordnung (7) gekoppelt ist, wobei der erste und zweite Führungsgleiter (112, 122) hinsichtlich eines gemeinsamen Bezugspunkts zumindest abschnittsweise mit unterschiedlichen Bewegungsgeschwindigkeiten verfahrbar sind, und dadurch Einstellen eines vorgegebenen Abstands (D) zwischen dem ersten und dem zweiten Führungsgleiter (112, 122) bezogen auf eine Längsachse (L) des Fahrzeugdachs (2) und dadurch Einstellen eines vorgegebenen Ausrichtungswinkels (A) der Displayanordnung (7) unabhängig von dem ausgebildeten ausgeklappten Zustand der Displayanordnung (7).

13. Verfahren nach Anspruch 12, bei dem das Betätigen der ersten und der zweiten Hebelmechanik (110, 120) umfasst:
- Ansteuern einer ersten Antriebseinheit (118), die mit dem ersten Antriebskabel (111) gekoppelt ist, und dadurch Bewegen eines aus ersten oder zweiten Führungsgleiters (112, 122), und
- Ansteuern einer zweiten Antriebseinheit (128), die mit dem zweiten Antriebskabel (111) gekoppelt ist, und dadurch Bewegen des anderen aus ersten oder zweiten Führungsgleiters (112, 122), sodass zumindest abschnittsweise unterschiedliche Bewegungsgeschwindigkeiten der beiden Führungsgleiter (112, 122) eingestellt sind.

14. Verfahren nach Anspruch 12 oder 13, bei dem das Einstellen der unterschiedlichen Bewegungsgeschwindigkeiten der beiden Führungsgleiter (112, 122) umfasst:
Steuern einer Drehzahlregelung der ersten und/oder der zweiten Antriebseinheit (118, 128).

15. Verfahren nach einem der Ansprüche 12 bis 14, bei dem das Betätigen der ersten und der zweiten Hebelmechanik (110, 120) umfasst:
- Verfahren des ersten Antriebskabels (111), das mit dem zweiten Führungsleiter (122) gekoppelt ist, und dadurch Verkleinern des Abstands (D0) zwischen den Führungsgleitern (112, 122) auf einen ersten Abstand (D1) und Ausklappen der Displayanordnung (7) mittels der Displayhebelanordnung (114, 115, 116), und
- Verfahren des zweiten Antriebskabels (121), das mittels einer zweiten Hebelanordnung (123) mit dem zweiten Führungsleiter (122) gekoppelt ist, und dadurch Vergrößern des ersten Abstands (D1) zwischen den Führungsgleitern (112, 122) auf einen zweiten Abstand (D2) und Einstellen eines Ausrichtungswinkels (A) der Displayanordnung (7).

16. Verfahren nach einem der Ansprüche 12 bis 15, umfassend:
- Verfahren des ersten Antriebskabels (111), das mit dem zweiten Führungsleiter (122) gekoppelt ist, und dadurch Verkleinern des Abstands (D0) zwischen den Führungsgleitern (112, 122) auf einen ersten Abstand (D1) und Ausklappen der Displayanordnung (7) mittels der Displayhebelanordnung (114, 115, 116),
- Koppeln des zweiten Führungsgleiters (122) mit dem ersten Führungsgleiter (112), und
- Verfahren des ersten Antriebskabels (111) und dadurch vorhertreiben des ersten Führungsgleiters (112) mittels des zweiten Führungsleiters (122) und Verfahren der ausgeklappten Displayanordnung (7) entlang der Längsachse (L).

## Claims

1. Device (100) for adjusting a display assembly (7) for a vehicle roof (2), comprising:
- a first lever mechanism (110) which is couplable to the display assembly (7) and which is designed for pivoting the display assembly (7) upwards and inwards and for moving same, and
- a second lever mechanism (120) which is couplable to the display assembly (7) and which is designed for setting a predetermined orientation angle (A) of the display assembly (7),
wherein the first lever mechanism (110) comprises a first guide slider (112), which is movable electrically by means of a first drive unit (118), **characterized in that** the first lever mechanism (110) further comprises a first drive cable (111) and a display lever assembly (114, 115, 116) that are movable electrically by means of the first drive unit (118),
wherein the second lever mechanism (120) has a second drive cable (121) and a second guide slider (122) that are movable electrically by means of a second drive unit (128), wherein the first and the second guide slider (112, 122) are movable at least in sections with respect to a common reference point at different movement speeds such that, irrespective of a position of the display assembly (7), set by means of the first lever mechanism (110), with respect to a longitudinal axis (L) of the device (100), a distance (D) between the first and the second guide slider (112, 122) and, as a result, an orientation angle (A) of the display assembly (7) can be set in a predetermined manner by means of the second lever mechanism (120).

2. Device (100) according to Claim 1, in which the second lever mechanism (120) furthermore has a coupling lever (127) which couples the first and second guide sliders (112, 122) to each other.

3. Device (100) according to Claim 2, in which the second lever mechanism (120) has a second lever assembly (123) which is coupled to the second drive cable (121) and, by means of the coupling lever (127), to the second guide slider (122) and which is configured to convert a horizontal offset (Vh) in a horizontal plane, which is perpendicular to a main plane of extent of the unfolded display assembly (7), into a change of the distance (D) between the guide sliders (112, 122).

4. Device (100) according to Claim 2 or 3, in which the second lever assembly (123) has a first pivot lever (124), a second pivot lever (125) and a guide lever (126) with respective slotted guide mechanisms (124k, 125k, 126k), which are coupled to the second drive cable (121) and to the coupling lever (127) and which are configured by means of the guide, which is predetermined by the respective slotted guide mechanisms (124k, 125k, 126k), to set a predetermined distance (D, D0, D1, D2) between the guide sliders (112, 122).

5. Device (100) according to Claim 4, in which the first pivot lever (124) and the guide lever (126) in the associated slotted guide mechanisms (124k, 126k) each have an elongate slotted guide mechanism section (124ka, 126ka) which runs obliquely relative to the longitudinal axis (L) and has a predetermined length (LKA) and, in a horizontal plane, encloses a predetermined angle with respect to the longitudinal axis (L).

6. Device (100) according to Claim 5, in which the predetermined length (LKA) and the predetermined angle of the elongate slotted guide mechanism sections (124ka, 126ka) relative to the longitudinal axis (L) are configured in accordance with a setting speed for setting a predetermined orientation angle (A) of the display assembly (7).

7. Device (100) according to one of Claims 1 to 6, in which the first drive cable (111) is coupled to the second guide slider (122) such that the first guide slider (112) is drivable by means of the second guide slider (122).

8. Device (100) according to one of Claims 1 to 7, comprising:
a first drive unit (118), which is coupled to the first drive cable (111), and a second drive unit (128), which is coupled to the second drive cable (121), wherein the first and/or the second drive unit (118, 128) have/has an electric motor which is coupled to the first drive cable (111) for pivoting the display assembly (7) upwards and inwards and for moving same, and/or which is coupled to the second drive cable (121) for setting a distance (D) between the guide sliders (112, 122) and for setting an orientation angle (A) of the display assembly (7).

9. Device according to Claim 8, in which the first and/or the second drive unit (118, 128) are/is designed in such a manner that the first and the second guide slider (112, 122) are movable at least in sections with respect to a common reference point at different movement speeds.

10. Device according to Claim 9, in which the different speeds of the first and the second guide slider (112, 122) can be set by means of an electronic rotational speed regulation of the first and/or the second drive unit (118, 128).

11. Vehicle roof (2) for a motor vehicle (1), comprising:
- guide rails (8) which are arranged on opposite sides of the vehicle roof (2) with respect to a longitudinal axis (L) of the vehicle roof (2), and
- a device (100) for adjusting a display assembly (7) according to one of Claims 1 to 10, which device is coupled to the vehicle roof (2) by means of the guide rails (8).

12. Method for adjusting a display assembly (7) for a vehicle roof (2), comprising:
- actuating a first lever mechanism (110) by moving a first drive cable (111) and a guide slider (112, 122), which is coupled to the first drive cable (111) and is coupled to the display assembly (7) by means of a pivotable display lever assembly (114, 115, 116), and thereby pivoting the display assembly (7) and forming an unfolded state of the display assembly (7), and
- actuating a second lever mechanism (120) by moving a second drive cable (121) and moving a second guide slider (122), which is coupled to the second drive cable (121) and is coupled to the display assembly (7), wherein the first and second guide sliders (112, 122) are movable at least in sections with respect to a common reference point at different movement speeds and, as a result, setting a predetermined distance (D) between the first and the second guide slider (112, 122) with respect to a longitudinal axis (L) of the vehicle roof (2) and thus setting a predetermined orientation angle (A) of the display assembly (7) irrespective of the unfolded state formed of the display assembly (7).

13. Method according to Claim 12, in which the actuation of the first and the second lever mechanism (110, 120) comprises:
- activating a first drive unit (118), which is coupled to the first drive cable (111), and thereby moving one out of the first or second guide slider (112, 122), and
- activating a second drive unit (128), which is coupled to the second drive cable (111), and thereby moving the other out of the first or second guide slider (112, 122) such that different movement speeds of the two guide sliders (112, 122) are set at least in sections.

14. Method according to Claim 12 or 13, in which the setting of the different movement speeds of the two guide sliders (112, 122) comprises:
controlling a rotational speed regulation of the first and/or the second drive unit (118, 128).

15. Method according to one of Claims 12 to 14, in which the actuation of the first and the second lever mechanism (110, 120) comprises:
- moving the first drive cable (111), which is coupled to the second guide slider (122), and thereby reducing the distance (D0) between the guide sliders (112, 122) to a first distance (D1) and unfolding the display assembly (7) by means of the display lever assembly (114, 115, 116), and
- moving the second drive cable (121), which is coupled to the second guide slider (122) by means of a second lever assembly (123), and thereby increasing the first distance (D1) between the guide sliders (112, 122) to a second distance (D2) and setting an orientation angle (A) of the display assembly (7).

16. Method according to one of Claims 12 to 15, comprising:
- moving the first drive cable (111), which is coupled to the second guide slider (122), and thereby reducing the distance (D0) between the guide sliders (112, 122) to a first distance (D1) and unfolding the display assembly (7) by means of the display lever assembly (114, 115, 116),
- coupling the second guide slider (122) to the first guide slider (112), and
- moving the first drive cable (111) and thereby advancing the first guide slider (112) by means of the second guide slider (122) and moving the unfolded display assembly (7) along the longitudinal axis (L).

## Revendications

1. Dispositif (100) de réglage d'un ensemble d'affichage (7) destiné à un toit de véhicule (2), comprenant :
- un premier mécanisme à levier (110) qui peut être accouplé à l'ensemble d'affichage (7) et qui est conçu pour faire pivoter l'ensemble d'affichage (7) vers le haut et vers l'intérieur et pour le déplacer, et
- un deuxième mécanisme à levier (120) qui peut être accouplé à l'ensemble d'affichage (7) et qui est conçu pour régler un angle d'orientation spécifié (A) de l'ensemble d'affichage (7),
le premier mécanisme à levier (110) comprenant un premier coulisseau de guidage (112) qui peut être déplacé électriquement au moyen d'une première unité d'entraînement (118), **caractérisé en ce que** le premier mécanisme à levier (110) comporte en outre un premier câble d'entraînement (111) et un ensemble de leviers et d'affichage (114, 115, 116) qui peut être déplacé électriquement au moyen de la première unité d'entraînement (118),
le deuxième mécanisme à levier (120) comportant un deuxième câble d'entraînement (121) et un deuxième coulisseau de guidage (122) qui peuvent être déplacés électriquement au moyen d'une deuxième unité d'entraînement (128),
les premier et deuxième coulisseaux de guidage (112, 122) pouvant être déplacés au moins par portions à des vitesses de déplacement différentes par rapport à un point de référence commun de sorte qu'une distance (D) entre les premier et deuxième coulisseaux de guidage (112, 122), et ainsi un angle d'orientation (A) de l'ensemble d'affichage (7), puissent être préréglés au moyen du deuxième mécanisme à levier (120) par rapport à un axe longitudinal (L) du dispositif (100) indépendamment de la position de l'ensemble d'affichage (7) qui est réglée au moyen du premier mécanisme à levier (110).

2. Dispositif (100) selon la revendication 1, dans lequel le deuxième mécanisme à levier (120) comprend en outre un levier d'accouplement (127) qui accouple les premier et deuxième coulisseaux de guidage (112, 122) l'un à l'autre.

3. Dispositif (100) selon la revendication 2, dans lequel le deuxième mécanisme à leviers (120) comporte un deuxième ensemble de leviers (123) qui est accouplé au deuxième câble d'entraînement (121) et, au moyen du levier d'accouplement (127), au deuxième coulisseau de guidage (122) et qui est conçu pour convertir un décalage horizontal (Vh), dans un plan horizontal qui est perpendiculaire à un plan d'extension principal de l'ensemble d'affichage déployé (7), en une variation de la distance (D) entre les coulisseaux de guidage (112, 122) .

4. Dispositif (100) selon la revendication 2 ou 3, dans lequel le deuxième ensemble de leviers (123) comporte un premier levier pivotant (124), un deuxième levier pivotant (125) et un levier de guidage (126) pourvus de coulisses respectives (124k, 125k, 126k) qui sont accouplées au deuxième câble d'entraînement (121) et au levier d'accouplement (127) et qui sont conçus, au moyen du guide spécifié par les coulisses respectives (124k, 125k, 126k), pour maintenir une distance spécifiée (D, D0, D1, D2 ) entre les coulisseaux de guidage (112, 122).

5. Dispositif (100) selon la revendication 4, dans lequel le premier levier pivotant (124) et le levier de guidage (126) dans les coulisses associées (124k, 126k) comportent chacun une portion de coulisse allongée (124ka, 126ka) qui s'étend obliquement par rapport à l'axe longitudinal (L) et qui a une longueur spécifiée (LKA) et forme un angle spécifié par rapport à l'axe longitudinal (L) dans un plan horizontal.

6. Dispositif (100) selon la revendication 5, dans lequel la longueur spécifiée (LKA) et l'angle spécifié des portions de coulisse allongées (124ka, 126ka) par rapport à l'axe longitudinal (L) sont conçus pour régler un angle d'orientation spécifié (A) de l'ensemble d'affichage (7) en fonction d'une vitesse de réglage.

7. Dispositif (100) selon l'une des revendications 1 à 6, dans lequel le premier câble d'entraînement (111) est accouplé au deuxième coulisseau de guidage (122) de sorte que le premier coulisseau de guidage (112) puisse être entraîné au moyen du deuxième coulisseau de guidage (122).

8. Dispositif (100) selon l'une des revendications 1 à 7, comprenant :
une première unité d'entraînement (118) qui est accouplée au premier câble d'entraînement (111) et une deuxième unité d'entraînement (128) qui est accouplée au deuxième câble d'entraînement (121), la première et/ou la deuxième unité d'entraînement (118, 128) comportant un moteur électrique qui est accouplé au premier câble d'entraînement (111) pour faire pivoter l'ensemble d'affichage (7) vers le haut et vers l'intérieur et pour le déplacer et/ou au deuxième câble d'entraînement (121) pour régler une distance (D) entre les coulisseaux de guidage (112, 122) et pour régler un angle d'orientation (A) de l'ensemble d'affichage (7).

9. Dispositif selon la revendication 8, dans lequel la première et/ou la deuxième unité d'entraînement (118, 128) sont conçues de telle sorte que les premier et deuxième coulisseaux de guidage (112, 122) puissent être déplacés au moins par portions avec des vitesses de déplacement différentes par rapport à un point de référence commun.

10. Dispositif selon la revendication 9, dans lequel les différentes vitesses des premier et deuxième coulisseaux de guidage (112, 122) peuvent être réglées au moyen d'une régulation de vitesse de rotation électronique de la première et/ou de la deuxième unité d'entraînement (118, 128).

11. Toit de véhicule (2) destiné à un véhicule automobile (1), ledit toit comprenant :
- des rails de guidage (8) qui sont disposés sur des côtés opposés du toit de véhicule (2) par rapport à un axe longitudinal (L) du toit de véhicule (2), et
- un dispositif (100) de réglage d'un ensemble d'affichage (7) selon l'une des revendications 1 à 10, lequel dispositif est accouplé au toit de véhicule (2) au moyen des rails de guidage (8).

12. Procédé de réglage d'un ensemble d'affichage (7) destiné à un toit de véhicule (2), ledit procédé comprenant les étapes suivantes :
- actionner un premier mécanisme à levier (110) par déplacement d'un premier câble d'entraînement (111) et d'un coulisseau de guidage (112, 122) qui est accouplé au premier câble d'entraînement (111) et qui est couplé à l'ensemble d'affichage (7) au moyen d'un ensemble de leviers et d'affichage pivotant (114, 115, 116), et ainsi faire pivoter l'ensemble d'affichage (7) et former un état déployé de l'ensemble d'affichage (7), et
- actionner un deuxième mécanisme à levier (120) par déplacement d'un deuxième câble d'entraînement (121) et par déplacement d'un deuxième coulisseau de guidage (122) qui est accouplé au deuxième câble d'entraînement (121) et qui est accouplé à l'ensemble d'affichage (7), les premier et deuxième coulisseaux de guidage (112, 122) pouvant être déplacés au moins par portion à des vitesses de déplacement différentes par rapport à un point de référence commun, et ainsi régler une distance prédéterminée (D) entre les premier et deuxième coulisseaux de guidage (112, 122) par rapport à un axe longitudinal (L) du toit de véhicule (2) et ainsi régler un angle d'orientation spécifié (A) de l'ensemble d'affichage (7) indépendamment de l'état déployé prévu de l'ensemble d'affichage (7).

13. Procédé selon la revendication 12, dans lequel l'étape d'actionnement des premier et deuxième mécanismes à levier (110, 120) comprend les étapes suivantes :
- commander une première unité d'entraînement (118) qui est accouplée au premier câble d'entraînement (111), et ainsi déplacer l'un des premier ou deuxième coulisseaux de guidage (112, 122), et
- commander une deuxième unité d'entraînement (128) qui est accouplée au deuxième câble d'entraînement (111), et ainsi déplacer l'autre des premier ou deuxième coulisseaux de guidage (112, 122) de manière à régler au moins par portions différentes vitesses de déplacement des deux coulisseaux de guidage (112, 122).

14. Procédé selon la revendication 12 ou 13, dans lequel l'étape de réglage des différentes vitesses de déplacement des deux coulisseaux de guidage (112, 122) comprend l'étape suivante :
- commander une régulation de vitesse de rotation de la première et/ou de la deuxième unité d'entraînement (118, 128).

15. Procédé selon l'une des revendications 12 à 14, dans lequel l'étape d'actionnement du premier et du deuxième mécanisme à levier (110, 120) comprend les étapes suivantes :
- déplacer le premier câble d'entraînement (111) qui est accouplé au deuxième coulisseau de guidage (122), et ainsi réduire la distance (D0) entre les coulisseaux de guidage (112, 122) à une première distance (D1) et déployer l'ensemble d'affichage (7) au moyen de l'ensemble de leviers et d'affichage (114, 115, 116), et
- déplacer le deuxième câble d'entraînement (121) qui est accouplé au deuxième coulisseau de guidage (122) au moyen d'un deuxième ensemble de leviers (123), et ainsi augmenter la première distance (D1) entre les coulisseaux de guidage (112, 122) à une deuxième distance (D2) et régler un angle d'orientation (A) de l'ensemble d'affichage (7).

16. Procédé selon l'une des revendications 12 à 15, comprenant les étapes suivantes :
- déplacer le premier câble d'entraînement (111) qui est accouplé au deuxième conducteur de guidage (122), et ainsi réduire la distance (D0) entre les coulisseaux de guidage (112, 122) à une première distance (D1) et déployer l'ensemble d'affichage (7) au moyen de l'ensemble de leviers et d'affichages (114, 115, 116),
- accoupler le deuxième coulisseau de guidage (122) au premier coulisseau de guidage (112), et
- déplacer le premier câble d'entraînement (111) et ainsi entraîner le premier coulisseau de guidage (112) vers l'avant au moyen du deuxième coulisseau de guidage (122) et déplacer l'ensemble d'affichage déployé (7) le long de l'axe longitudinal (L).
